# EUROPEAN PATENT SPECIFICATION

(11) **EP 2 389 562 B1**
(45) Date of publication and mention of the grant of the patent: **16.03.2016**
(21) Application number: 10714372.9
(22) Date of filing: 30.03.2010
(51) Int. Cl.: G01C 21/30

(54) **MAP DATA UPDATE SYSTEM, MAP DATA UPDATE METHOD, COMPUTER-READABLE STORAGE MEDIUM STORING MAP DATA UPDATE PROGRAM**
SYSTEM ZUR AKTUALISIERUNG VON KARTENDATEN, VERFAHREN ZUR AKTUALISIERUNG VON KARTENDATEN, COMPUTERLESBARES SPEICHERMEDIUM MIT DARAUF GESPEICHERTEM PROGRAMM ZUR AKTUALISIERUNG VON KARTENDATEN
SYSTÈME ET PROCÉDÉ DE MISE À JOUR DE DONNÉES DE CARTE, ET SUPPORT DE STOCKAGE LISIBLE PAR ORDINATEUR STOCKANT UN PROGRAMME DE MISE À JOUR DE DONNÉES DE CARTE

(30) Priority: 31.03.2009 JP 2009087088
(43) Date of publication of application: 30.11.2011
(73) Proprietor: Aisin AW Co., Ltd., Fujii-cho Anjo-shi Aichi 444-1192 (JP); TOYOTA JIDOSHA KABUSHIKI KAISHA, Toyota-shi, Aichi-ken, 471-8571 (JP); Denso Corporation, Kariya-shi, Aichi 448-8661 (JP)
(72) Inventor: NAKAMURA Masaki, Anjo-shi Aichi 444-1192 (JP); TAKAHARA Masatoshi, Anjo-shi Aichi 444-1192 (JP); KANBA Motoki, Anjo-shi Aichi 444-1192 (JP); YOSHIDA Masaki, Anjo-shi Aichi 444-1192 (JP); ORUI Takashi, Anjo-shi Aichi 444-1192 (JP); WADA Yousuke, Toyota-shi Aichi 471-8571 (JP); ITO Noriaki, Toyota-shi Aichi 471-8571 (JP); TSURUMI Kiyoshi, Kariya-shi Aichi 448-8661 (JP)
(74) Representative: TBK
(86) International application number: PCT/JP2010/056141
(87) International publication number: WO 2010/114161

(56) References cited:
- DE-A1-102006 037 334
- DE-C1- 10 209 173

## Description

### 1. Field of the Invention

The present invention relates to a technology that, in a system that stores road network data that describe a road in terms of connection relationships between nodes that correspond to intersections and links that correspond to roads that connect the intersections, and that also stores additional data in association with each of the links, performs an update of the road network data.

### 2. Description of the Related Art

A navigation system is known that provides and stores road network data that describe a road in terms of connection relationships between nodes that correspond to intersections and links that connect the intersections, and that also provides and stores additional data in association with each of the links. For example, in Japanese Patent Application Publication No. JP-A-2006-275690, a device is described that derives driving-related information based on image recognition results for driving-related information that is included in an image of a vehicle's surroundings that is obtained by an image capture unit that is installed in the vehicle. The device also stores a map database that contains road network data in which the derived driving-related information serves as additional data and in which position information and section information are associated with the additional data. The device that is described in Japanese Patent Application Publication No. JP-A-2006-275690 is capable of performing vehicle control through a driving support unit, based on the collected driving-related information that serves as the additional data that is stored in the map database, and is also capable of performing driving support.

On the other hand, a data update system is also known, in a navigation system that provides and stores road network data that describe a road in terms of connection relationships between nodes that correspond to intersections and links that connect the intersections, that, in a case where a change has occurred in an actual road, updates the road network data in accordance with the change. For example, in Japanese Patent Application Publication No. JP-A-2006-171106, a method is described for updating the road network data in a navigation device using update data that are created based on difference data that are created based on a comparison of a new version of map data that is newly obtained to an old version of map data that is stored in a server device. The technology that is described in Japanese Patent Application Publication No. JP-A-2006-171106 can easily perform an update of the road network data in the navigation device and is also capable of reducing the processing load on the navigation device by reducing the volume of data that are transmitted during the update processing.

### SUMMARY OF THE INVENTION

According to the navigation system that is described in Japanese Patent Application Publication No. JP-A-2006-275690, as long as the map database is stored that contains the road network data in which the collected and stored driving-related information that serves as the additional data is appropriately associated with the position information and the section information, that is, as long as the associations between the driving-related information and the links are appropriate, it is possible to provide various types of services, such as vehicle driving control and the like, based on the collected driving-related information. However, where the road network data are updated by a method like that described in Japanese Patent Application Publication No. JP-A-2006-171106, for example, cases occur in which the associations between the driving-related information and the links are not appropriately maintained. Specifically, in a case where a new link is added for a newly constructed road, in a case where a link is deleted due to the elimination of a road, and the like, for example, information for identifying the various links that configure the road network data is different after the road network data are updated than it was before the update. When this happens, the driving-related information that serves as the additional data may enter a state in which it is associated with links other than the links with which it should be associated, or the driving-related information that serves as the additional data may enter a state in which it is not associated with any links at all, such that it becomes impossible, in some cases, to provide various types of services appropriately.

Document DE 102 09 173 C1 discloses a map data update system as set out in the preamble of claim 1, a map data update method as set out in the preamble of claim 14, and a computer-readable storage medium as set out in the preamble of claim 15. In detail, a navigation system is disclosed, wherein a digital map and a supplemental digital map are provided. The supplemental digital map data are updated using differential data provided by a control center.

It is an object of the present invention to provide a technology that, when the road network data are updated in accordance with a change in an actual road, maintains, even after the updating, a state of appropriate association between the road network data and the additional data that are obtained by a means that differs from a means that obtains update data for updating the road network data.

This object is solved by a map data update system as defined in claim 1.

According to the configuration that is described above, when the update processing of the road network data has been executed, the comparing of a link end coordinate and a link direction of the post-update link to a link end coordinate and a link direction of the pre-update link makes it possible to determine which of the post-update links among the links that are included in the road network data after the update correspond to the same roads as the pre-update links. Based on those determinations, the correcting portion corrects the association information in the additional data such that the links that are associated with the additional data correspond to the same roads before and after the update. Therefore, it is possible, when the road network data are updated in accordance with the changes in the actual roads, to appropriately maintain the association between the additional data and the road network data, even after the update.

The above object is also solved by a map data update method as defined in claim 12, and alternatively by a computer-readable storage medium as defined in claim 13.

According to this configuration, when the update processing of the road network data has been executed, the comparing of a link end coordinate and a link direction of the post-update link to a link end coordinate and a link direction of the pre-update link makes it possible to determine which of the post-update links among the links that are included in the road network data after the update correspond to the same roads as the pre-update links. Based on those determinations, the association information in the additional data is corrected, such that the links that are associated with the additional data correspond to the same roads before and after the update. Therefore, it is possible, when the road network data are updated in accordance with the changes in the actual roads, to appropriately maintain the association between the additional data and the road network data, even after the update. Advantageous developments are set out in the dependent claims.

### BRIEF DESCRIPTION OF THE DRAWINGS

The features, advantages, and technical and industrial significance of this invention will be described in the following detailed description of example embodiments of the invention with reference to the accompanying drawings, in which like numerals denote like elements, and wherein:
FIG. 1 is a block diagram that shows an overall configuration of a navigation device according to an embodiment of the present invention;
FIG. 2 is a block diagram that shows an overall configuration of a server device according to the embodiment of the present invention;
FIG. 3 is a figure that shows an example of a configuration of map data that include road network data and that are stored in a map database according to the embodiment of the present invention;
FIG. 4 is a figure that shows an example of information for nodes that are included in the road network data;
FIG. 5 is a figure that shows an example of information for links that are included in the road network data;
FIG. 6 is a figure that shows examples of feature data that are stored in the map database;
FIG. 7 is a figure that shows an example of a disposition of an imaging device on a vehicle according to the embodiment of the present invention;
FIG. 8A and FIG. 8B are explanatory figures for explaining an overview of collection processing for learned feature data according to the embodiment of the present invention;
FIG. 9 is a figure that shows an example of information that is included in the learned feature data;
FIG. 10 is an explanatory figure for explaining a determination standard for an identicalness determining portion according to the embodiment of the present invention;
FIG. 11A and FIG. 11B are figures that show a concrete example of correction processing according to the embodiment of the present invention;
FIG. 12 is a figure that shows another concrete example of the correction processing;
FIG. 13 is a figure that shows another concrete example of the correction processing;
FIG. 14 is a flowchart that shows a procedure for feature data learning processing and map data update processing according to the embodiment of the present invention; and
FIG. 15 is a flowchart that shows a detailed procedure for the correction processing.

### DETAILED DESCRIPTION OF THE EMBODIMENTS

An embodiment of the present invention will be explained with reference to the drawings. An example will be explained of a case in which a map data update system according to the present invention is configured from an in-vehicle navigation device 1 and a server device 2 that is capable of communicating with a plurality of the navigation devices 1. The navigation device 1 that configures the map data update system is provided with a map database 31 that stores road network data 33 that describe a road in terms of connection relationships between nodes n that correspond to intersections and links k that correspond to roads that connect intersections and is also provided with a learned database 35 that stores learned feature data 36 serving as additional data that are associated with various links and also stores association information that describes the associations between the additional data and the associated links. In a case where an actual road has changed, the navigation device 1 receives update data 53 that correspond to the change and that are created and distributed by the server device 2, then updates the road network data 33 that are stored in the map database 31. When the road network data 33 are updated, a correcting portion 17 with which the map data update system is provided corrects the association information for the learned feature data 36 that are stored in the learned database 35 and are associated with the links that are changed by the update processing. Thus, after the road network data 33 are updated in accordance with a change in an actual road, the road network data 33 is appropriately associated with the learned feature data 36 that are obtained by a means that differs from a means that obtains the update data 53.

### 1. Configuration of the navigation device

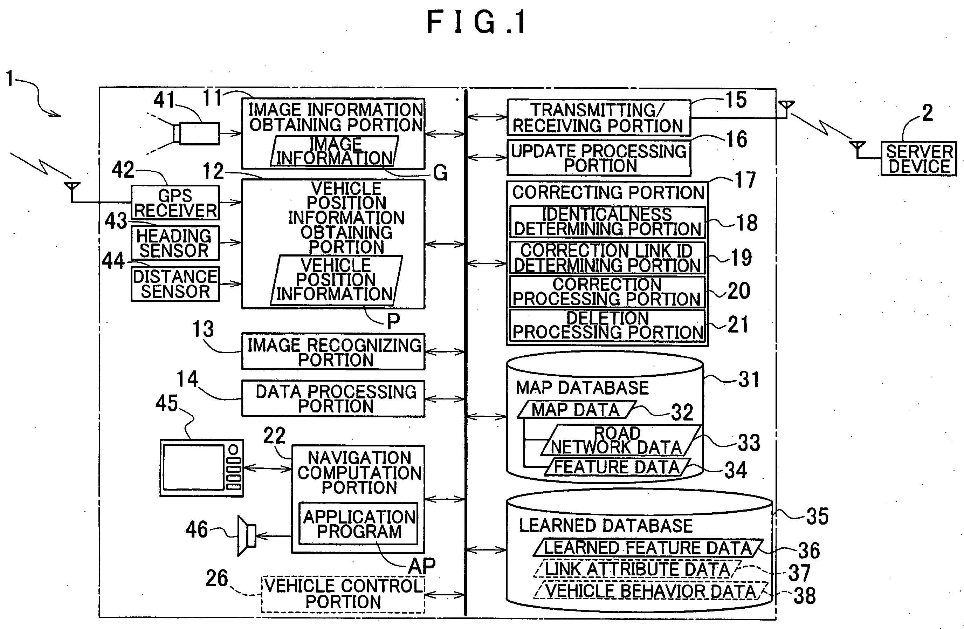

The configuration of the navigation device 1 will be now be described. The components of the navigation device 1 shown in FIG. 1 each include a computation processing device such as a CPU or the like that is one of mutually shared and independently utilized computation processing devices. Each component for executing various processes on received data may be implemented as hardware, software (a program), or via a combination of both hardware and software. In the present embodiment, the navigation device 1 is provided with an image information obtaining portion 11, a vehicle position information obtaining portion 12, an image recognizing portion 13, a data processing portion 14, a transmitting/receiving portion 15, an update processing portion 16, the correcting portion 17, and a navigation computation portion 22 as the functional portions. The various functional portions are also configured such that they are able to exchange information with one another through a communication line such as a digital transmission bus or the like. In a case where the various functional portions are configured from software (programs), the software is stored in a storage unit such as a RAM, a ROM, or the like. Further, the map database 31 and the learned database 35 are provided in a hardware configuration in the form of storage media (storage units), such as hard disk drives, flash memories, DVD drives that are provided with DVD-RAMs, and the like, for example. The configuration of each of the portions of the navigation device 1 will be explained in detail below.

### 1-1. Map database

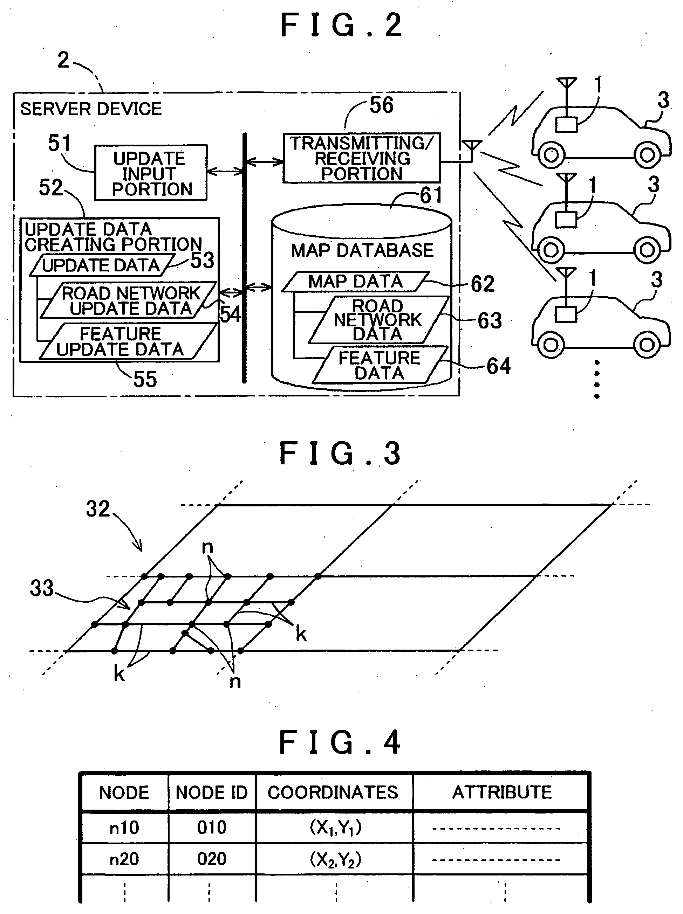

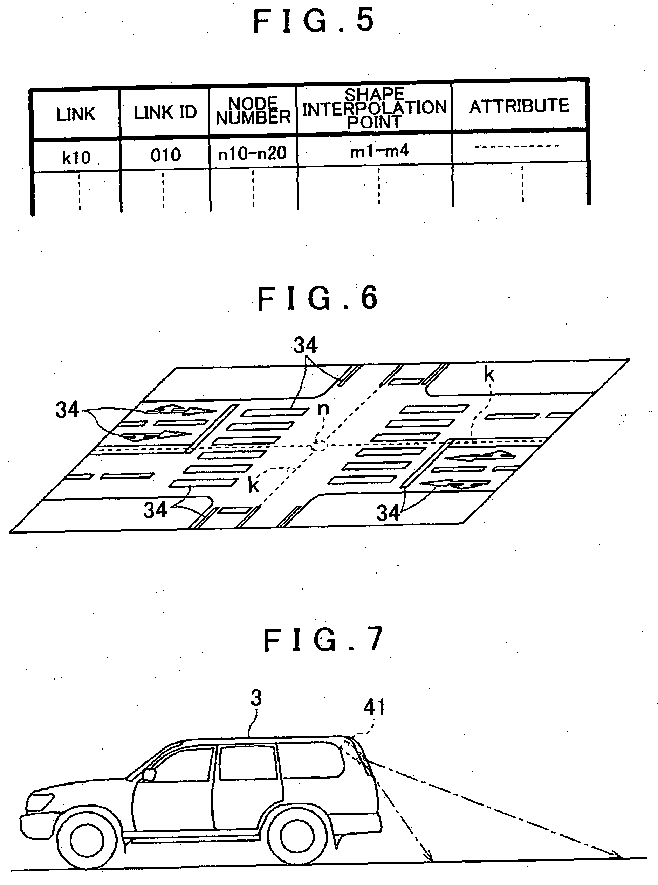

Map data 32 are stored in the map database 31. The map data 32 include the road network data 33 that describe a road in terms of the connection relationships between the nodes n that correspond to intersections and the links k that correspond to roads that connect intersections, as shown in FIG. 3, for example. In the present embodiment, the map database 31 functions as a first storage portion in the present invention. For each of the nodes n, the map data 32 include information on the node's position (coordinates) on a map, expressed in terms of the latitude and the longitude, as shown in FIG. 4. The various links k are connected through the nodes n. Moreover, as shown in FIG. 5, for each of the links k, the map data 32 include information on a road type, a region type, a link length, a road width, a shape interpolation point m, and the like, as attribute information. At least one shape interpolation point m is provided along each of the links k. The shape of the link is expressed by the disposition of the shape interpolation point m. Each of the nodes n and each of the links k has a unique node ID and a unique link ID, respectively, as identification information. In addition to the road network data 33, the map data 32 include drawing information that is necessary for map display processing by the navigation computation portion 22, various types of guidance information that are necessary for route guidance processing, and the like. Background information that is necessary for displaying road shapes, buildings, rivers, and the like, character information that is necessary for displaying names of cities, towns, and villages, road names, and the like, and the like are included in the drawing information.

In addition, information on various types of features that are provided on roads and in the vicinity of roads, that is, feature data 34, are also included in the map data 32 that are stored in the map database 31. The feature data 34 are prepared and stored in advance in the map database 31. The feature data 34 include information on a plurality of features, such as road markings (painted markings) that are provided on the surfaces of roads, pedestrian crosswalks, stop lines, speed markings that indicate a speed limit and the like, striped zones, demarcation lines that separate lanes along a road (including various types of demarcation lines, such as solid lines, broken lines, double lines, and the like), direction-of-travel differentiation markings that indicate directions of travel in individual lanes (including arrow markings, such as a straight-ahead arrow, a right-turn arrow, and the like), and the like, for example. Examples of these sorts of feature data 34 are shown in FIG. 6. These sorts of feature data 34 are stored in association with the links that correspond to the roads on which the features are provided. Specifically, the feature data 34 include, as association information, information on the link ID of the link that corresponds to the road on which the feature is provided and are stored in association with the links that correspond to the roads on which the features are provided.

### 1-2. Learned database

The learned database 35 stores the learned feature data 36 that are obtained for a vehicle 3 by the image information obtaining portion 11, the image recognizing portion 13, and the data processing portion 14 that are provided in the vehicle 3. The learned feature data 36 are stored in association with the links included in the map data 32. Specifically, the storing of the learned feature data 36 in association with the links that correspond to the roads on which the features are provided is accomplished by including in each item of the learned feature data 36, as association information, information on the link ID of the link that corresponds to the road on which the feature is provided. In the present embodiment, the learned feature data 36 correspond to additional data in the present invention, and the learned database 35 functions as a second storage portion in the present invention. The learned feature data 36 also include, as position information for the features, information that indicates relative positional relationships to coordinates of link ends (link termini) of the links that are associated with the features, that is, information on the distances from the link ends (the link termini) to the features. In addition, the learned feature data 36 include attribute information that indicates types and the like of the features. A method by which the learned feature data 36 are obtained by the image information obtaining portion 11, the image recognizing portion 13, and the data processing portion 14 will be described later.

### 1-3. Image information obtaining portion

The image information obtaining portion 11 obtains image information G about the area around the vehicle 3 that is captured by an imaging device 41. The imaging device 41 is a vehicle-mounted camera or the like that is provided with an image capture element, and it is provided in a position where it can capture an image of at least the surface of the road around the vehicle 3. For example, a rear-mounted camera that captures an image of the road surface to the rear of the vehicle 3, as shown in FIG. 7, may be used as the imaging device 41. At specified time intervals, the image information obtaining portion 11, through a frame memory (not shown in the drawings) or the like, obtains the image information G that is captured by the imaging device 41. The time intervals at which the image information G is obtained can be in the range of 10 to 50 milliseconds, for example. Thus the image information obtaining portion 11 can serially obtain a plurality of frames of the image information G that is captured by the imaging device 41. The obtained image information G is output to the image recognizing portion 13.

### 1-4. Vehicle position information obtaining portion

The vehicle position information obtaining portion 12 obtains vehicle position information P that indicates the current position of the vehicle 3. The vehicle position information obtaining portion 12 detects the vehicle position by obtaining the vehicle position information P. In the present embodiment, the vehicle position information obtaining portion 12 functions as a vehicle position detecting portion in the present invention. The vehicle position information obtaining portion 12 is connected to a GPS (Global Positioning System) receiver 42, a heading sensor 43, and a distance sensor 44. The GPS receiver 42 receives GPS signals from GPS satellites. The GPS signals are normally received at 1-second intervals and are output to the vehicle position information obtaining portion 12. The vehicle position information obtaining portion 12 can analyze the signals that are received from the GPS satellites by the GPS receiver 42, and obtain information such as the current position (the latitude and the longitude) of the vehicle 3, the direction of travel, the speed of movement, and the like. The heading sensor 43 is a sensor that detects one of the direction of travel of the vehicle 3 and a change in the direction of travel. The heading sensor 43 may be configured from a gyroscopic sensor, a geomagnetic sensor, one of an optical rotary sensor and a rotary type resistance volume that is attached to a rotating part of the steering wheel, an angle sensor that is attached to a wheel portion, or the like. The heading sensor 43 also outputs its detection result to the vehicle position information obtaining portion 12. The distance sensor 44 is a sensor that detects the speed of the vehicle 3 and the distance the vehicle 3 has traveled. The distance sensor 44 may be configured from a vehicle speed pulse sensor that outputs a pulse signal every time one of a drive shaft and a wheel of the vehicle rotates a fixed amount, one of a yaw rate sensor and a G sensor that detects the acceleration of the vehicle 3, in combination with a circuit that integrates the detected acceleration, or the like. The distance sensor 44 outputs information on the vehicle speed and the distance traveled as detection results to the vehicle position information obtaining portion 12.

The vehicle position information obtaining portion 12 also uses a known method to perform a computation that specifies the vehicle position based on the outputs from the GPS receiver 42, the heading sensor 43, and the distance sensor 44. The vehicle position information obtaining portion 12 also obtains from the map database 31 the road network data 33 for the area around the extracted vehicle position, and by performing known map matching based on the road network data 33, performs correction that places the vehicle position on a road that is indicated by the road network data 33. Thus the vehicle position information obtaining portion 12 obtains the vehicle position information P that includes information on the current position of the vehicle 3, expressed as the latitude and the longitude, and information on the direction of travel of the vehicle 3.

### 1-5. Image recognizing portion

The image recognizing portion 13 performs image recognition processing for a target feature that is included in the image information G that is obtained by the image information obtaining portion 11. The features that serve as the target feature include various types of road markings that are provided on the surfaces of roads, such as pedestrian crosswalks, stop lines, speed markings, and the like. When performing the image recognition processing for the target feature, the image recognizing portion 13 performs binarization processing and edge detection processing on the image information G and extracts contour information for the features (the road markings) that are included in the image information G. The image recognizing portion 13 then extracts the target feature that is included in the image information G by performing pattern matching between the contour information for the extracted features and a characteristic quantity for the shape of the target feature. The result of the image recognition processing by the image recognizing portion 13 is output to the data processing portion 14.

### 1-6. Data processing portion

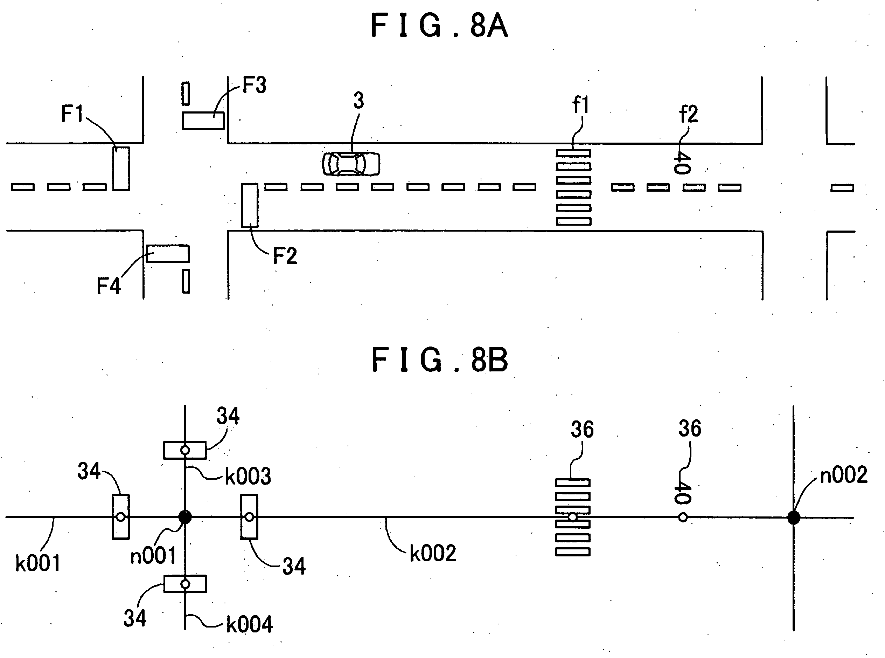

The data processing portion 14 performs processing for storing in the learned database 35 information that indicates the result of the image recognition processing by the image recognizing portion 13. In the present embodiment, the data processing portion 14 performs processing that, based on the image of the target feature that is included in the image information G and that was extracted by the image recognizing portion 13, adds to the learned feature data 36 data that pertain to a feature that is not included in the feature data 34 that are stored in the map database 31. In the present embodiment, the data processing portion 14 functions as a data obtaining portion in the present invention. FIGS. 8A and 8B are explanatory figures for explaining an overview of collection processing for the learned feature data 36. FIG. 8A shows road markings on a road on which the vehicle 3 is traveling, and FIG. 8B shows the nodes n, the links k, the feature data 34, and the learned feature data 36 that correspond to FIG. 8A. Note that in FIG. 8A, information that pertains to road markings that signify stop lines F1 to F4 is prepared and stored in advance in the feature data 34 that are stored in the map database 31, while on the other hand, information that pertains to road markings that signify a pedestrian crosswalk f1 and a speed limit f2 is not stored in advance in the feature data 34 that are stored in the map database 31.

As the vehicle 3 travels on the road, the image information G of the area around the vehicle 3 is captured by the imaging device 41, and the image recognition processing that is described above is performed. For example, the information that pertains to the road marking that signifies the stop line F1 is stored in that feature data 34 in advance, so even if the image recognizing portion 13 succeeds in the image recognition processing of the stop line F1, that result is not added to the learned feature data 36. Note that in this case, processing is performed that, based on the image recognition result for the stop line F1, corrects the position that is indicated by the vehicle position information P to the position (the coordinates) where the stop line F1 is provided, although a detailed explanation of the this processing will be omitted. On the other hand, because the information that pertains to the road marking that signifies the pedestrian crosswalk f1 and the speed limit f2 is not stored in advance in the feature data 34, in a case where the image recognition processing by the image recognizing portion 13 is successful for the pedestrian crosswalk f1 and the speed limit f2, the data processing portion 14 performs the processing that adds those results to the learned feature data 36. The added learned feature data 36 are stored in association with at least the link in the map data 32. More specifically, the added learned feature data 36 include, as association information the link ID (refer to FIG. 5) for the link that corresponds to the road on which the features are provided and are stored in association with the link that corresponds to the road on which the features are provided.

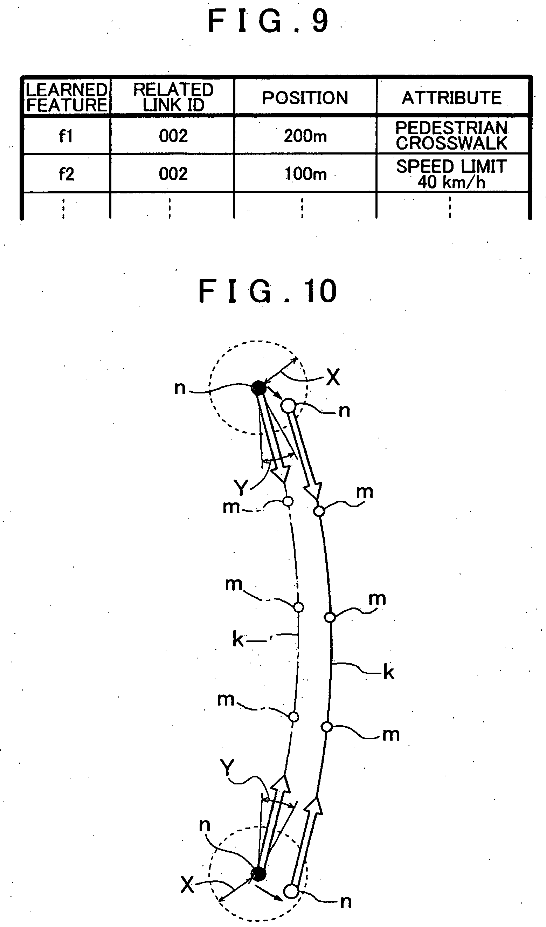

FIG. 9 is a figure that shows an example of information that is included in the learned feature data 36. As shown in FIG. 9, the learned feature data 36 for each of the features includes at least the link ID as the association information that is described above, information that describes the relative positional relationship of the feature to the coordinates of the link end (link terminus) of the link that are associated with the feature, that is, information on the distances from the link end (the link terminus) to the feature, and the attribute information that indicates the type of the feature. Note that in order to simplify the explanation, the link IDs use the three-digit numbers, with the prefix "k", to label the links k in FIG. 8B. The combination of these items of information makes it possible to specify what information that corresponds to what feature that is provided in what position on what road is included in the learned feature data 36 that are obtained by the vehicle 3. For example, referring to FIGS. 8A, 8B, and 9, it is possible to specify that the road marking that indicates the pedestrian crosswalk f1 is provided on the link k002, as indicated by the link ID 002, at a location that is 200 meters from the link terminus (the node n002). It is also possible to specify that the road marking that indicates the speed limit (40 km/h) marker f2 is provided on the link k002, as indicated by the link ID 002, at a location that is 100 meters from the link terminus (the node n002).

Note that, in a specified case, the data processing portion 14 performs processing that deletes the learned feature data 36 from the learned database 35, as will be described later.

### 1-7. Transmitting/receiving portion 15

The transmitting/receiving portion 15 is provided with a communication device that performs transmitting and receiving of data by wireless communication with the server device 2 through a wireless base station or the like. The wireless communication method can be, for example, a method that utilizes a known communication network such as a mobile telephone network, a wireless local area network (LAN), or the like. As will be described later, in the present embodiment, the transmitting/receiving portion 15 receives from the server device 2 the update data 53 for updating, in accordance with a change in an actual road, the road network data 33 that are included in the map data 32 that are stored in the map database 31. Note that, in addition to data for updating the road network data 33, data for updating the feature data 34 may also be included in the update data 53. The update data 53 will be described later.

### 1-8. Update processing portion

The update processing portion 16 receives the update data 53 for the road network data 33 in accordance with a change in an actual road and performs an update of the road network data 33 that is included in the map data 32. In the present embodiment, the update processing portion 16 functions as an update portion in the present invention. As will be described later, the update data 53 include at least road network update data 54 for updating the road network data 33. In the present embodiment, when the transmitting/receiving portion 15 receives the update data 53 from the server device 2, the update processing portion 16 automatically performs update processing for the road network data 33. As will also be described later, in the present embodiment, the update data 53 are created as difference data that describe as a difference the content of the change in the actual road in which the change has been made. Therefore, the update processing portion 16 also performs difference update processing. In other words, the update processing portion 16 performs the difference update processing for the map database 31 by applying to the road network data 33 that are stored in the map database 31 the content of one of an addition, a change, and a deletion that has been made to road network data 63 that are stored in a map database 61 (refer to FIG. 2), the content being included in the update data 53 that are the difference data. Note that in a case where the update data 53 include feature update data 55 in addition to the road network update data 54, the update processing portion 16 performs the difference update processing for the map database 31 by applying to the feature data 34 that are stored in the map database 31 the content of one of an addition, a change, and a deletion that has been made to feature data 64 that are stored in a map database 61 (refer to FIG. 2).

Incidentally, the learned feature data 36 that are stored in the learned database 35 is obtained and stored by the vehicle 3, unlike the feature data 34, which are prepared and stored in advance in the map database 31. Therefore, when the navigation device 1 receives the update data 53 that are distributed by the server device 2 and the road network data 33 that are stored in the map database 31 are updated by the update processing portion 16, the relationships between the learned feature data 36 and the links may not be appropriately maintained. Specifically, in a case where a new link is added for a newly constructed road, in a case where a link is deleted due to the elimination of a road, and the like, for example, the link IDs for the various links that are included in the road network data 33 may be different after the road network data 33 are updated from what they were before the update. In these cases, only the link IDs for the various links that are included in the road network data 33 are changed, and the link ID information that is included as the association information in the learned feature data 36 are not changed, so the learned feature data 36 that the vehicle 3 has obtained and stored in the learned database 35 may be associated with links other than the links with which they should be associated, and the learned feature data 36 may not be associated with any of the links at all. Accordingly, in the map data update system according to the present invention, in order to eliminate this problem, the navigation device 1 is provided with the correcting portion 17, which will be described next.

### 1-9. Correcting portion

When the update processing for the road network data 33 has been performed by the update processing portion 16, the correcting portion 17 corrects the link IDs that serve as the association information that is included in the learned feature data 36 that are stored in the learned database 35 and is associated with the link that is changed by the update processing. In the present embodiment, the correcting portion 17 functions as a correcting portion in the present invention. The correcting portion 17 is provided with an identicalness determining portion 18, a correction link ID determining portion 19, a correction processing portion 20, and a deletion processing portion 21 as functional portions for implementing the functions that are described above. Each of these functional portions will be described in detail below. Note that in the explanation that follows, the term "the correcting portion 17" is used as a concept that encompasses each of the functional portions, the identicalness determining portion 18, the correction link ID determining portion 19, the correction processing portion 20, and the deletion processing portion 21.

### 1-9-1. Identicalness determining portion

The identicalness determining portion 18 compares the link end coordinates and the link directions of the pre-update and post-update links, and in a case where the link end coordinates and the link direction of at least one end of the post-update link are within respective specified identicalness determination ranges from the link end coordinates and the link direction at least one end of the pre-update link, the identicalness determining portion 18 determines that the pre-update and post-update links are links that correspond to the same road. In the present embodiment, the identicalness determining portion 18 functions as an identicalness determining portion in the present invention. In the present embodiment, the identicalness determining portion 18 makes the determination as to whether or not the link end coordinates and the link directions of the link that was associated with the learned feature data 36 before the update of the road network data 33 and the link end coordinates and the link directions of the link that is included in the post-update road network data 33 are within the specified identicalness determination ranges from one another. Here, the term "identicalness determination ranges" means respective ranges within which the link end coordinates and the link directions of the pre-update and post-update links can be seen as indicating substantially the same link end coordinates and link directions, even if they are somewhat different and not a perfect match. In the present embodiment, the identicalness determining portion 18 first determines whether or not the link end coordinates of the pre-update and post-update links are within the corresponding identicalness determination ranges from one another. For identicalness determination processing for the link end coordinates, the identicalness determination ranges may be set as shown in FIG. 10, for example, where they are ranges that are delineated by circles with a radius of X meters whose centers are the link ends of the pre-update link. In a case where the link ends of the post-update link are within the ranges that are delineated by the two circles with a radius of X meters whose centers are the corresponding link ends of the pre-update link, the determination is made that the link end coordinates of the pre-update and post-update links are within the identicalness determination ranges from one another. At this time, the radius of X meters that delineates the identicalness determination ranges can be set to one meter, for example. However, the radius of X meters that delineates the identicalness determination ranges can be modified to any other setting as desired. Note that the determination as to whether any one of the link end coordinates of the post-update link is contained within the corresponding range that is delineated by the radius of X meters is made by determining whether or not a distance between two points is not greater than X meters, the distance between two points being obtained by a computation that is based on the link end coordinates of the pre-update link and the link end coordinates of the post-update link.

Next, the identicalness determining portion 18 determines whether or not the link end coordinates and the link directions of the pre-update and post-update links are respectively within the specified identicalness determination ranges from one another. For the link end coordinates, identicalness is determined by using as the identicalness determination ranges the ranges that are delineated by the circles with the radius of X meters whose centers are the link ends of the pre-update link, in the manner described above. For the link directions, ranges that are delineated in a fan shape, with a central angle of Y degrees and a range of 0.5Y degrees from the center to each side, are set as the identicalness determination ranges for the directions that extend from each end of the pre-update link. For a pair of the pre-update and post-update links for which it has been determined that the link end coordinates are within the identicalness determination ranges, a determination is made that the link directions are within the identicalness determination ranges in a case where the directions that extend from the link ends of the post-update link are within the identicalness determination ranges of ± 0.5Y degrees in relation to the directions that extend from the link ends of the pre-update link. To put it another way, a determination is made that the link directions are within the identicalness determination ranges in a case where the directions that extend from the link ends of the post-update link are within ranges that are set by taking the vertices of the two fan shapes with the central angle of Y degrees that are set on the link ends of the pre-update link and shifting those vertices to the link ends of the post-update link. At this time, the central angles of Y degrees of the fan shapes that delineate the identicalness determination ranges can be set to 10 degrees. Note that the central angles of Y degrees of the fan shapes that delineate the identicalness determination ranges can also be modified to any other setting as desired.

Note that in the present embodiment, when the identicalness determining portion 18 performs the identicalness determination processing for the link directions, a direction that extends from any one link end of the link k toward the shape interpolation point that is close to the link end is defined as the link direction for that link end. In this specification, the expression "shape interpolation point m that is close to the link end" obviously includes a shape interpolation point that is the closest to the link end, but the expression also includes a shape interpolation point that is provided such that at least one shape interpolation point is located between the shape interpolation and the link end. However, the shape interpolation point m that is located between the link end and the midpoint of the link k. The shape interpolation point m is information that is used for expressing the shape of the link k, so defining the link direction in this manner as the direction from the link end toward the shape interpolation point m that is close to the link end makes it possible for the identicalness determining portion 18 to perform the identicalness determination processing appropriately for the link direction. It is therefore possible for the determination to be made appropriately as to whether or not the pre-update and post-update links are links that correspond to the same road. Accordingly, in this configuration, the determination as to whether or not one of the link directions of the post-update link is within the corresponding identicalness determination range is made by determining whether or not an angle between two vectors is not greater than ± 0.5Y degrees, the angle being obtained by a computation that is based on a vector from one of the link ends of the pre-update link toward the shape interpolation point m that is close to the link end and on a vector from the corresponding link end of the post-update link toward the corresponding shape interpolation point m that is close to the link end.

According to the configuration that is described above, because it is possible to set the link direction to an appropriate direction in accordance with the shape of the link, it is also possible for the identicalness determining portion to appropriately perform the determination as to whether or not the pre-update and post-update links correspond to the same road.

### 1-9-2. Correction link ID determining portion

In a case where it has been determined by the identicalness determining portion 18 that a combination of a plurality of post-update links corresponds to the same road as a single pre-update link, the correction link ID determining portion 19, based on information that is included in the learned feature data 36 and that indicates relative positional relationships to the link end coordinates, determines whether to correct the link ID that is included as the association information in the learned feature data 36 such that the association information indicates an association with one of the post-update links in the plurality of the post-update links. The correction link ID determining portion 19 functions as a correction link ID determining portion in the present invention. For example, in a case where a single pre-update link that corresponds to a single road corresponds to two post-update links k1, k2, it may happen that the identicalness determining portion 18 determines that the one pre-update link and the two post-update links k1, k2 are links that correspond to the same road. In this sort of case, the correction link ID determining portion 19 obtains, from the learned feature data 36 that are stored in the learned database 35, the information that indicates the relative positional relationships to the coordinates of the link ends (the link termini) of the link that is associated with the feature, that is, the information on the distances from the link ends (the link termini) of the associated link to the features. Based on this information, the correction link ID determining portion 19 determines with which link of the two post-update links k1, k2 it is appropriate for the learned feature data 36 to be associated.

In this case, the information on the distances from the link ends (the link termini) of the associated link to the features is information for which one link end of the two link ends serves as a reference, with the information indicating the distances to the features from the link end that serves as the reference. Accordingly, a determination is first made as to whether or not an inconsistency will arise if an association is made between the learned feature data 36 and the post-update link k1, for which it has been determined that the link end coordinates and the link direction for the link end that serves as the reference for the distance information are within the respective identicalness determination ranges. More specifically, in a case where the distance information indicates that the distances to the features from the link end of the associated link are shorter than or equal to the length of the post-update link k1, for which it has been determined that the link end coordinates and the link direction for the link end that serves as the reference for the distance information are within the respective identicalness determination ranges, the determination is made that an inconsistency will not arise, and the determination is made that it is appropriate for the learned feature data 36 to be associated with the link k1. On the other hand, in a case where the distance information indicates that the distances to the features from the link end of the associated link are longer than the length of the post-update link k1, for which it has been determined that the link end coordinates and the link direction for the link end that serves as the reference for the distance information are within the respective identicalness determination ranges, the determination is made that an inconsistency will arise, the determination is made that it is not appropriate for the learned feature data 36 to be associated with the link k1, and a determination is made that that it is appropriate for the learned feature data 36 to be associated with the other link k2.

For example, in a case where a new road is constructed that connects to an existing road, after the update, the single link that corresponds to the existing road will be divided into a plurality of links. Accordingly, the identicalness determining portion may determine that the single pre-update link and the plurality of the post-update links are links that correspond to the same road. According to the present configuration, even in this sort of case, the correction link ID determining portion, based on the information that is included in the additional data and that indicates the relative positional relationships to the link end coordinates, will determine with which of the plurality of the post-update links the association information will be associated. Therefore, it is possible to maintain an appropriate state of association between the additional data and the road network data, even after the update.

Note that in the case where it has been determined that the one pre-update link and the two post-update links k1, k2 are links that correspond to the same road in a case where a separate link k3 also exists between the two post-update links k1, k2, the identicalness determining portion 18 will determine that a combination of the two post-update links k1, k2 and all of at least one link that exists between them corresponds to the one pre-update link. Then the correction link ID determining portion 19, based on the information that is included in the learned feature data 36 and that indicates the relative positional relationship to the link end coordinates, will determine whether to correct the link ID that serves as the association information such that the association information indicates an association with one of the post-update links.

### 1-9-3. Correction processing portion

The correction processing portion 20 corrects the link ID that serves as the association information that is included the learned feature data 36 such that the association information indicates an association with the post-update link that the identicalness determining portion 18 has determined is the link that corresponds to the same road. In other words, the correction processing portion 20 corrects the link ID that serves as the association information that is included the learned feature data 36 by choosing between the pre-update link and the post-update link that the identicalness determining portion 18 has determined are links that correspond to the same road and changing the link ID of the pre-update link to the link ID of the post-update link. It is thus possible to appropriately maintain the association between the learned feature data 36 and the road network data 33, even after the update of the road network data 33. In the present embodiment, the correction processing portion 20 functions as a correction processing portion in the present invention.

According to the configuration that is described above, by determining whether or not the link end coordinates and the link direction of at least one end of the post-update link are within the respective specified identicalness determination ranges from the link end coordinates and the link direction of at least one end of the pre-update link, the identicalness determining portion is able to appropriately determine which of the pre-update links and the post-update links among the various links that are included the pre-update and the post-update road network data correspond to the same roads. The correction processing portion then corrects the association information to indicate an association with the post-update link that the identicalness determining portion has determined is the link that corresponds to the same road. It is thus possible to appropriately maintain the association between the additional data and the road network data, even after the update.

### 1-9-4. Deletion processing portion

In a case where there is no post-update link that has been determined by the identicalness determining portion 18 to be a link that corresponds to the same road as the pre-update link, the deletion processing portion 21 deletes from the learned database 35 the learned feature data 36 that are associated with the pre-update link. In other words, in a case where, after the road network data 33 have been updated, there is no link in the post-update road network data 33 that has been determined by the identicalness determining portion 18 to be a link that corresponds to the same road as the pre-update link with which the learned feature data 36 are associated, the deletion processing portion 21, having determined that the learned feature data 36 that are associated with the pre-update link have already become unnecessary after the update, deletes the learned feature data 36 from the learned database 35. It is thus possible to conserve storage space for storing the learned feature data 36 in the learned database 35. In the present embodiment, the deletion processing portion 21 functions as a deletion processing portion in the present invention.

For example, in a case where there is no post-update link that has been determined by the identicalness determining portion to be a link that corresponds to the same road as the pre-update link, it is conceivable that an actual road has been eliminated or that the shape of the road has changed significantly. In this sort of case, the additional data (the learned feature data 36) that are stored in association with the pre-update link lose their meaning after the update, because an actual road that corresponds to the post-update link does not exist. According to the configuration that is described above, because the deletion processing portion deletes from the second storage portion (the learned database 35) the additional data that have become unnecessary, it is possible to conserve the storage space for storing the additional data.

### 1-10. Concrete example of the correction processing

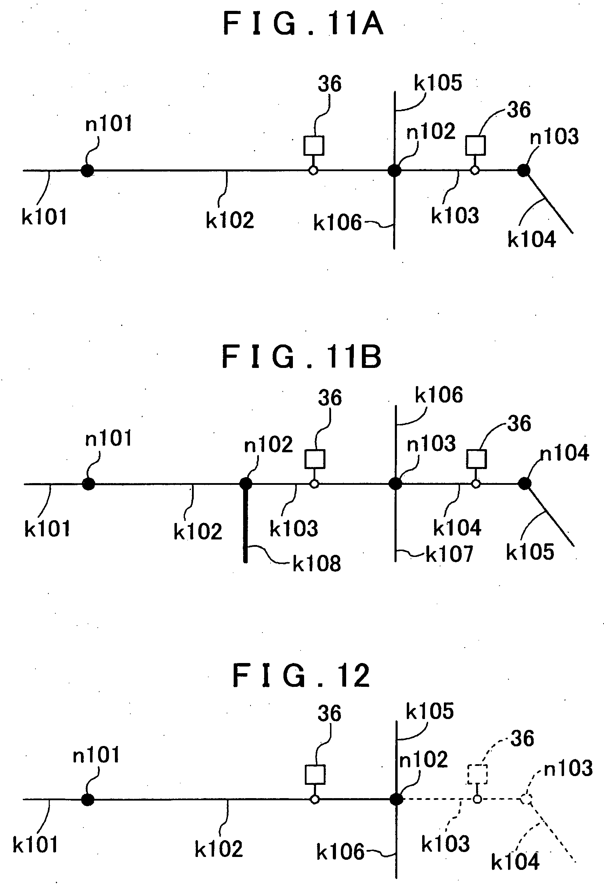

Next, a concrete example of the correction processing by the correcting portion 17 will be explained based on FIGS. 11A to 13. FIGS. 11A and 11B show an example of a case in which a new road is established and the road network data 33 are updated accordingly. FIG. 11A shows the state of the road network data 33 before the update, and FIG. 11B shows the state of the road network data 33 after the update. In this example, a new road has been established that corresponds to a post-update link k108 and that is connected to a road that corresponds to a pre-update link k102. In conjunction with the establishment of the new road, the road that corresponds to the pre-update link k102 has been divided into two roads that correspond to a post-update link k102 and a post-update link k103. In this case, when the road network data 33 are updated, the identicalness determining portion 18 makes a determination as to whether or not the link end coordinates and the link directions of the pre-update link k102 and a pre-update link k103 with which the learned feature data 36 were associated before the update and those of the post-update link are within the respective specified identicalness determination ranges from one another. The details of the identicalness determination processing have already been explained, so further explanation will be omitted here. It is determined that the post-update link k102 and the post-update link k103 are links that correspond to the same road as the pre-update link k102. It is also determined that a post-update link k104 is a link that corresponds to the same road as the pre-update link k103.

In this case, it has been determined that the pre-update link k102 and the combination of the post-update link k102 and the post-update link k103 correspond to the same road, so correction link ID determination processing is performed by the correction link ID determining portion 19. The details of the correction link ID determination processing have already been explained, so further explanation will be omitted here. The correction link ID determining portion 19 determines that the link ID that serves as the association information that is included in the learned feature data 36 is to be corrected such that the learned feature data 36 that were associated with the pre-update link k102 will be associated with the post-update link k103. Based on this determination, the correction processing portion 20 corrects the link ID that serves as the association information from 102 in the road network data 33 before the update to 103 in the road network data 33 after the update. On the other hand, because it has been determined that the pre-update link k103 and the post-update link k104 are links that correspond to the same road, the correction link ID determination processing is not performed by the correction link ID determining portion 19, and the correction processing portion 20 corrects the link ID that serves as the association information from 103 in the road network data 33 before the update to 104 in the road network data 33 after the update.

FIG. 12 shows an example of a case in which an existing road has been eliminated and the road network data 33 have been updated accordingly. Note that FIG. 11A shows the road network data 33 before the update. In this example, the roads that correspond to the pre-update link k103 and a pre-update link k104 have been eliminated. Note that in FIG. 12, the link k103 and the link k104 that correspond to the eliminated roads are indicated by broken lines. In this case, once the road network data 33 have been updated, the identicalness determining portion 18 makes the determination as to whether or not the link end coordinates and the link directions of the link k102 and the link k103 with which the learned feature data 36 are associated and those of the post-update link are within the respective specified identicalness determination ranges from one another. The details of the identicalness determination processing have already been explained, so further explanation will be omitted here. It is determined that the pre-update link k102 and the post-update link k102 are links that correspond to the same road. It is also determined that there is no post-update link that corresponds to the same road as the pre-update link k103.

In this case, it has been determined that only the post-update link k102 is a link corresponds to the same road as the pre-update link k102, so the correction processing portion 20 corrects the link ID that serves as the association information from 102 in the road network data 33 before the update to 102 in the road network data 33 after the update (in effect, not making any correction). In contrast, because it has been determined that there is no post-update link that corresponds to the same road as the pre-update link k103, the deletion processing portion 21 deletes from the learned database 35 the learned feature data 36 that are associated with the pre-update link k103.

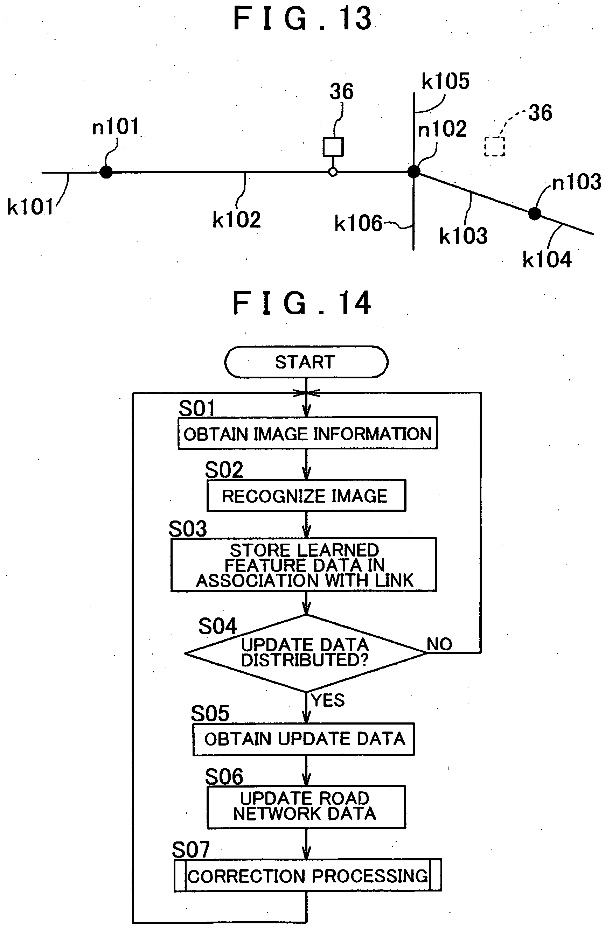

FIG. 13 shows an example of a case in which the shapes of existing roads have been partially changed and the road network data 33 have been updated accordingly. Note that FIG. 11A shows the road network data 33 before the update. In this example, the shapes of the roads that correspond to the pre-update link k103 and the pre-update link k104 have been changed. In this case, once the road network data 33 have been updated, the identicalness determining portion 18 makes the determination as to whether or not the link end coordinates and the link directions of the link k102 and the link k103 with which the learned feature data 36 are associated and those of the post-update link are within the respective specified identicalness determination ranges from one another. The details of the identicalness determination processing have already been explained, so further explanation will be omitted here. It is determined that the pre-update link k102 and the post-update link k102 are links that correspond to the same road. Further, with regard to the pre-update link k103, although the link end coordinates of one end of the post-update link k103 are within the corresponding identicalness determination range, the link direction of that link end is not within the corresponding identicalness determination range, so the determination is made that the post-update link k 103 is not a link that corresponds to the same road as the pre-update link k 103. Accordingly, it is determined that there is no post-update link that corresponds to the same road as the pre-update link k103.

In this case, it has been determined that only the post-update link k102 is a link corresponds to the same road as the pre-update link k102, so the correction processing portion 20 corrects the link ID that serves as the association information from 102 in the road network data 33 before the update to 102 in the road network data 33 after the update (in effect, not making any correction). In contrast, because it has been determined that there is no link that corresponds to the same road as the pre-update link k103, the deletion processing portion 21 deletes from the learned database 35 the learned feature data 36 that are associated with the pre-update link k103.

### 1-11. Consistency with feature data update

The correction processing by the correcting portion 17 maintains the learned feature data 36 and the road network data 33 in a state of being appropriately associated, even after the road network data 33 have been updated. On the other hand, in a case where the update data 53 include the feature update data 55 in addition to that road network update data 54, the update processing for the feature data 34 that are stored in the map database 31 is also performed. When that is done, in a case where information on an additional feature is included in the feature update data 55, the learned feature data 36 and the feature data 34 that is updated based on the feature update data 55 may have the same attribute and be associated with the same link after the updating of the road network data 33. In a case where the feature data 34 and the learned feature data 36 that have the same attribute and different contents are used for route guidance or the like by the navigation computation portion 22, which will be described later, a problem may occur in that the guidance results may be different between the learned feature data 36 and the feature data 34 that is updated based on the feature update data 55.

Accordingly, the navigation device 1 according to the present embodiment is configured such that, in a case where the feature data 34 and the learned feature data 36 with the same attribute are both associated with the same link after the update by the update processing portion 16, the learned feature data 36 are deleted from the learned database 35. This prevents an inconsistency from arising between the learned feature data 36 and the feature data 34 that are associated with the same link and makes it possible for the navigation computation portion 22 to perform the route guidance appropriately. Furthermore, deleting the unnecessary learned feature data 36 that are not actually used makes it possible to conserve storage space for storing the learned feature data 36. Note that the present embodiment is configured such that the processing that deletes the learned feature data 36 from the learned database 35 as described above is performed by the data processing portion 14. Therefore, in the present embodiment, the data processing portion 14 functions as a data deleting portion in the present invention.

For example, in a case where the additional data (the learned feature data 36) and related data (the feature update data 55) that are associated with the same link have the same attribute and the different information in their contents are used for route guidance, vehicle control, or the like, the output results may be different between the additional data and the related data, making it impossible to provide various types of services appropriately. According to the configuration that is described above, in a case where the related data and the additional data with the same attribute are both associated with the same link after the road network data have been updated, the data deleting portion deletes the additional data, preventing an inconsistency from arising between the additional data and the related data that are associated with the same link and making it possible to provide various types of services appropriately. Furthermore, deleting the unnecessary additional data that are not actually used makes it possible to conserve storage space for storing the additional data.

### 1-12. Navigation computation portion

The navigation computation portion 22 is a computational processing portion that operates in accordance with an application program AP in order to execute navigation functions such as displaying the vehicle's current position, computing a route from a departure point to a destination, providing route guidance to a destination, searching for a destination, and the like. For example, the navigation computation portion 22 may perform processing that obtains the map data 32 for the area around the vehicle from the map database 31, displays a map image on a display input device 45, and displays a vehicle position mark that is superimposed on the map image based on the vehicle position information P. Based on a route from a departure point to a destination that is computed by a known method and on the vehicle position information P, the navigation computation portion 22 also provides course guidance using at least one of the display input device 45 and an audio output device 46. In doing so, the navigation computation portion 22 references the road network data 33, the feature data 34, and the learned feature data 36 that are stored in the map database 31 and the learned database 35, then performs the processing that is described above based on those data. Because the navigation computation portion 22 operates by referencing the road network data 33 and the feature data 34 that are stored in the map database 31, as well as the learned feature data 36 that are stored in the learned database 35, the navigation device 1 according to the present embodiment is able to perform more detailed route guidance and the like. Because the navigation computation portion 22 operates based on the road network data 33 and the learned feature data 36 that are appropriately associated with the post-update road network data 33, the navigation device 1 can perform the more detailed route guidance appropriately in accordance with changes in the actual roads.

Note that the navigation computation portion 22 is also connected to various types of known structures that are required for the navigation device 1, such as a user interface or the like in the form of a touch panel or the like that is provided as a single unit with a remote controller and the display input device 45.

The map data update system according to the present invention includes a vehicle position detecting portion that detects a position of a vehicle; and a navigation computational processing portion that performs computational processing for navigation by referencing the vehicle position, as well as the road network data and the additional data that are stored in the first storage portion and the second storage portion, respectively.

### 2. Configuration of the server device

Next, the configuration of the server device 2 will be explained. As shown in FIG. 2, the server device 2 is provided such that it can communicate with a plurality of the navigation devices 1 that are respectively installed in a plurality of the vehicles 3. The server device 2 also creates the update data 53 for the map data 32 in accordance with the changes in the actual roads and distributes the update data 53 to the vehicles 3.

Various functional portions of the server device 2 that is shown in FIG. 2 are configured such that each of the functional portions has, as a core member, a computational processing device such as a CPU or the like that is one of shared and independently provided in each of the functional portions, and the functional portions for performing various types of processing with respect to data that are input are configured from one of hardware, software (programs), and both hardware and software. In the present embodiment, the server device 2 is provided with an update input portion 51, and update data creating portion 52, and a transmitting/receiving portion 56 as the functional portions. The various functional portions are also configured such that they are able to exchange information with one another through a communication line such as a digital transmission bus or the like. In a case where the various functional portions are configured from software (programs), the software is stored in a storage unit such as a RAM, a ROM, or the like. Further, the map database 61 is provided in a hardware configuration in the form of storage media (storage units) in which information can be stored and rewritten, such as hard disk drives, flash memories, DVD drives that are provided with DVD-RAMs, and the like, for example. The configuration of each of the portions of the server device 2 will be explained in detail below.

### 2-1. Map database

The map database 61 is a database in which map data 62 are stored. In basically the same manner as the map data 32 that are stored in the map database 31 that is provided in the navigation device 1, the map data 62 include the road network data 63 that describe a road in terms of the connection relationships between the nodes n that correspond to intersections and the links k that correspond to roads that connect intersections. The nodes n include information on the node's position (coordinates) on a map, expressed in terms of the latitude and the longitude. The various links k are connected through the nodes n. Moreover, for each of the links k, the map data 62 include information on a road type, a region type, a link length, a road width, a shape interpolation point for describing the shape of the link, and the like, as attribute information. Each of the nodes n and each of the links k has a unique node ID and a unique link ID, respectively, as identification information. In addition, information on various types of features that are provided on roads and in the vicinity of roads, that is, the feature data 64, are also included in the map data 62 that are stored in the map database 61. The feature data 64 include road markings (painted markings) that are provided on the surfaces of roads, pedestrian crosswalks, stop lines, speed markings that indicate a speed limit and the like, striped zones, road markings that separate lanes along a road (including various types of demarcation lines, such as solid lines, broken lines, double lines, and the like), direction-of-travel differentiation markings that indicate directions of travel in individual lanes (including arrow markings, such as a straight-ahead arrow, a right-turn arrow, and the like), and the like, for example. Further, the contents of the map database 61 serve as a reference for the creation of the update data 53, which is described later.

### 2-2. Update input portion

The update input portion 51 is a terminal for inputting data that correspond to a change in an actual road. The data that are input specify the content that is to be newly added, changed, deleted, and the like with respect to the road network data 63 and the feature data 64 that are stored in the map database 61 that is provided in the server device 2. For example, in a case where a new road has actually been constructed, intersection data, connection data, road data, shape data, and the like that configure the parts of the road network data 33 that pertain to the road, as well as various types of image data and the like that configure the parts of the feature data 34 that pertain to the road, are input as new data from the update input portion 51. In addition, in a case where a road has been eliminated, for example, information is input that designates various types of data and the like that configure the parts of the road network data 33 and the feature data 34 that will become unnecessary due to the elimination of the road. Furthermore, in a case where, for example, the shape of an existing road has been changed because the road has been enlarged or the like, shape data such as the shape interpolation points and the like that conform to the changed shape of the road are input as new data from the update input portion 51. Additionally, in a case where a traffic regulation for a specific road, such as the speed limit or the like, has been changed, attribute information that pertains to the road, such as the speed limit or the like, is input as new data from the update input portion 51. To be specific, a personal computer or the like that is provided with a keyboard, a mouse, a monitor, and the like can be used as the update input portion 51.

### 2-3. Update data creating portion

The update data creating portion 52 creates the update data 53 for causing the change in the actual road to be reflected in the map data 32. The update data 53 include information for performing the update processing for the map database 31, incorporating changes to the map database 31 and the content to be updated in a single file. In the present embodiment, the update data 53 are created as the difference data that describe as differences the contents of the changes in the actual roads, in units of roads (in units of links k), with the contents of the map data 62 serving as references. The update data 53 are created such that they include the road network update data 54 and the feature update data 55 in correspondence with the road network data 63 and the feature data 64 that are included in the map data 62. The feature update data 55 are associated with the links that configure the road network data 33, 63, in the same manner as the feature data 34 that are stored in the map database 31 and the feature data 64 that are stored in the map database 61. Therefore, in the present embodiment, the feature update data 55 correspond to the related data in the present invention. Furthermore, the present embodiment is configured such that once the update data 53 have been created, the created update data 53 are automatically distributed to the vehicle 3 through the transmitting/receiving portion 56.

### 2-4. Transmitting/receiving portion

The transmitting/receiving portion 56 is provided with a communication device that performs transmitting and receiving of data by wireless communication, through a wireless base station or the like, with the navigation devices 1 that are installed in the plurality of the vehicles 3. The wireless communication method is used in common with the transmitting/receiving portions 15 of the navigation devices 1, for example, a known communication network such as a mobile telephone network, a wireless local area network (LAN), or the like. In the present embodiment, as described above, the transmitting/receiving portion 56 transmits to the navigation devices 1 the update data 53 that are created by the update data creating portion 52 for updating the road network data 33 in accordance with changes on actual roads.

### 3. Operation processing procedure

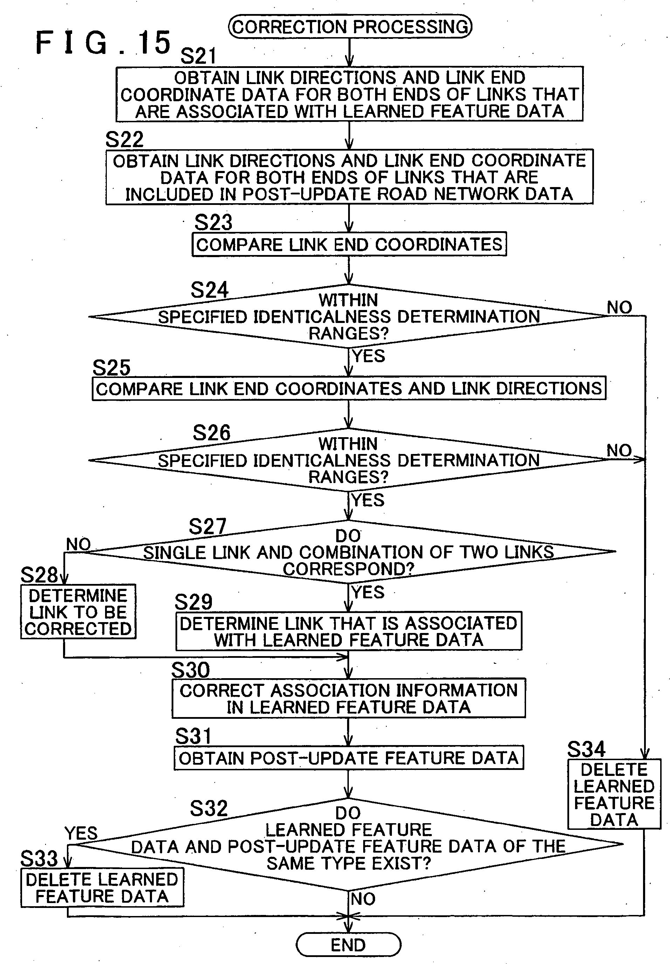

Next, a procedure (a map data update method) for map data update processing that is performed in the navigation device 1 according to the present embodiment will be explained. FIG. 14 is a flowchart that shows the overall procedure for the map data update processing according to the present embodiment. FIG. 15 is a flowchart that shows a detailed processing procedure for the correction processing at S07 in FIG. 14. The procedure for the processing that is explained below is implemented by one of the hardware, the software (the programs), and both the hardware and the software that configure the various functional portions that are described above. In a case where the various functional portions that are described above are configured from a program, the computational processing device that is included in the navigation device 1 operates as a computer that executes a map data update program that configures the various functional portions that are described above.

### 3-1. Procedure for the map data update processing

First, the overall procedure for feature data learning processing and the map data update processing by the navigation device 1 that is incorporated into the map data update system according to the present embodiment will be explained with reference to FIG. 14. First, the image information obtaining portion 11 obtains the image information G that has been captured by the imaging device 41 that is installed in the vehicle 3 (S01). Next, the image recognizing portion 13 performs the image recognition processing that treats the various types of road markings that are provided on the surface of the road as the target features that are included in the image information G (S02). The results of the image recognition processing by the image recognizing portion 13 are output to the data processing portion 14, and data that are based on the image recognition processing results are stored in the learned database 35 in association with the links that configure the road network data 33 (S03). Next, the update processing portion 16 determines whether or not the update data 53 have been distributed by the server device 2 (S04). In a case where it is determined that the update data 53 have not been distributed by the server device 2 (NO at S04), the processing from S01 to S04 is performed again.

On the other hand, in a case where it is determined that the update data 53 have been distributed by the server device 2 (YES at S04), the navigation device 1 obtains the update data 53 by receiving them from the server device 2 through a transmitting/receiving portion 15 (S05). Next, the update processing portion 16, based on the content of the received update data 53, updates the road network data 33 that are stored in the map database 31 (S06). Note that at this time, in a case where the feature update data 55 are included in the update data 53, the feature data 34 that are stored in the map database 31 are also updated. Next, the correction processing is performed by the correcting portion 17 (S07). The correction processing by the correcting portion 17 will be explained below. Once the correction processing has been completed, the processing returns to S01, and the processing from S01 to S07 is performed again. Thus the navigation device 1 according to the present embodiment is configured such that it performs the feature data learning processing and the map data update processing repeatedly in sequence.

### 3-2. Procedure for the correction processing

Next, the procedure for the correction processing at S07 will be explained in detail based on FIG. 15. First, the identicalness determining portion 18 obtains the link end coordinates and the link directions for both ends of the pre-update links that are associated with the learned feature data 36 (S21). Next, the identicalness determining portion 18 obtains the link end coordinates and the link directions for both ends of the links that are included in the post-update road network data 33 (S22). Then the identicalness determining portion 18 compares the link end coordinates that were respectively obtained at S21 and S22 (S23) and determines whether or not the link end coordinates of the post-update links are within the specified identicalness determination ranges from the link end coordinates of the pre-update links (S24). In a case where it determines that the link end coordinates of the post-update links are within the specified identicalness determination ranges from the link end coordinates of the pre-update links (YES at S24), the identicalness determining portion 18 compares the link end coordinates and the link directions of the pre-update links and the post-update links that were respectively obtained at S21 and S22 (S25) and determines whether or not the link end coordinates and the link directions of the post-update links are within the respective specified identicalness determination ranges from the link end coordinates and the link directions of the pre-update links (S26). In a case where it determines that the link end coordinates and the link directions of the post-update links are within the specified identicalness determination ranges from the link end coordinates and the link directions of the pre-update links (YES at S26), the identicalness determining portion 18 determines whether or not a single pre-update link and a combination of two post-update links correspond to the same road (S27).

In a case where it is determined that the single pre-update link and a combination of two post-update links k1, k2 do not correspond to the same road, that is, where the single pre-update link and the two post-update link k1 do correspond to the same road (NO at S27), the link k1 is automatically determined to be the link that is to be corrected (S28). On the other hand, in a case where it is determined that the single pre-update link and the combination of the two post-update links k1, k2 do correspond to the same road (YES at S27), the correction link ID determining portion 19 determines the link that will be associated with the learned feature data 36, based on the information that is included in the learned feature data 36 and that indicates the relative positional relationships to the link end coordinates (S29). Next, based on the link that was determined at one of S28 and S29, the correction processing portion 20 corrects the link ID that is included in the learned feature data 36 as the association information (S30). Next, the data processing portion 14 obtains the post-update feature data 34 (S31) and determines whether or not the feature data 34 and the learned feature data 36 that have the same attribute are both associated with the same post-update link (S32).

In a case where it is determined that the feature data 34 and the learned feature data 36 that have the same attribute are not both associated with the same post-update link (NO at S32), the correction processing is terminated. On the other hand, in a case where it is determined that the feature data 34 and the learned feature data 36 that have the same attribute are both associated with the same post-update link (YES at S32), the data processing portion 14 deletes the learned feature data 36 from the learned database 35 (S33), after which the correction processing is terminated. Furthermore, in a case where it is determined that the link end coordinates of the post-update links are not within the specified identicalness determination ranges from the link end coordinates of the pre-update links (NO at S24), as well as in a case where it is determined that the link end coordinates and the link directions of the post-update links are not within the specified identicalness determination ranges from the link end coordinates and the link directions of the pre-update links (NO at S26), the deletion processing portion 21 deletes the learned feature data 36 from the learned database 35 (S34), after which the correction processing is terminated.

### Other embodiments

(1) In the embodiment that is described above, an example was explained of a case in which the present invention is applied to the map data update system that appropriately maintains the association between the learned feature data 36 and the road network data 33, even after the road network data 33 have been updated, with the learned feature data 36 serving as the additional data. However, the embodiments of the present invention are not limited to this example. Specifically, various types of information other than the learned feature data 36 can also serve as the additional data as long as the information is obtained by a unit that is different from the update processing portion 16 and is stored in association with individual links. For example, in one embodiment of the present invention, link attribute data 37 that are obtained based on the results of the image recognition by the image recognizing portion 13 and that describe traffic regulations such as a speed limit, a direction of travel, or the like for a given road serve as the additional data and are applied to the map data update system according to the present invention. Alternatively, in one embodiment of the present invention, data that pertain to the behavior of the vehicle and that are obtained based on various types of information from an accelerator angle detection unit, a brake operation amount detection unit, and the like that are not shown in the drawings, that is vehicle behavior data 38, serve as the additional data and are applied to the map data update system according to the present invention.
(2) Furthermore, in a case where the link attribute data 37 and the vehicle behavior data 38 serve as the additional data that are applied to the map data update system according to the present invention, the vehicle 3 may also be configured such that it is provided with, as one of a single unit with the navigation device 1 and a separate unit, a vehicle control portion 26 for controlling the operations of various portions of the vehicle 3. The vehicle control portion 26 may also be configured such that it operates by referencing the road network data 33 that are stored in the map database 31 and the link attribute data 37 and the vehicle behavior data 38 that are stored in the learned database 35. In this configuration, the vehicle control portion 26 may operate by referencing the road network data 33, as well as on the link attribute data 37 and the vehicle behavior data 38. Therefore, the vehicle control portion 26 is capable of performing more precise vehicle control. In this case, because the vehicle control portion 26 operates based on the road network data 33, as well as on the link attribute data 37 and the vehicle behavior data 38 that are appropriately associated with the road network data 33 that have been updated by the map data update system, the vehicle control portion 26 is capable of performing this sort of more precise vehicle control appropriately in accordance with the changes in the actual roads.

The additional data may be configured to be obtained by the data obtaining portion that is provided in a vehicle. The additional data may include at least one of a feature data that pertains to a feature that is provided on a road, link attribute data that pertains to an attribute of the link, and vehicle behavior data that pertains to a behavior of a vehicle.

According to the configuration that is described above, it is possible for the various types of obtaining portions that are provided in the vehicle to obtain at least one of the feature data, the link attribute data, and vehicle behavior data, and it is possible to use these data for route guidance, vehicle control, and the like. Even in a case where the road network data have been updated, the additional data and the road network data are maintained in the state of being appropriately associated both before and after the update, so it is possible for the processing for the route guidance, the vehicle control, and the like to be performed appropriately.

The map data update system according to the present invention includes a vehicle position detecting portion that detects a position of a vehicle; and a vehicle control portion that controls the vehicle by referencing the vehicle position, as well as the road network data and the additional data that are stored in the first storage portion and the second storage portion, respectively.
(3) In the embodiment that is described above, an example was explained of a case in which, where it has been determined by the identicalness determining portion 18 that a combination of a plurality of post-update links corresponds to the same road as a single pre-update link, the correction link ID determining portion 19 determines whether to correct the link ID that serves as the association information such that the association information is associated with one of the post-update links, based on the information that is included in the learned feature data 36 and that indicates the relative positional relationships to the link end coordinates. However, the embodiments of the present invention are not limited to this example. Specifically, one embodiment of the present invention is configured such that in this sort of case, for example, the deletion processing portion 21 deletes from the learned database 35 the learned feature data 36 that are associated with the pre-update link.
(4) In the embodiment that is described above, an example was explained of a case in which the learned feature data 36 are deleted from the learned database 35 in a case where the feature data 34 and the learned feature data 36 with the same attribute are both associated with the same link after the update by the update processing portion 16. However, the embodiments of the present invention are not limited to this example. Specifically, one embodiment of the present invention is configured such that in this sort of case, for example, the feature data 34 are deleted from the map database 31.
(5) In the embodiment that is described above, an example was explained of a case in which the identicalness determining portion 18 performs the identicalness determination processing for the link direction such that the link direction is the direction from one link end of the link k toward the shape interpolation point m that is close to the link end. However, the embodiments of the present invention are not limited to this example. Specifically, one embodiment of the present invention is configured such that, in a case where the link length of the link k is short, in a case where the shape of the link k is regarded as being roughly a straight line, or the like, for example, the identicalness determining portion 18 performs the identicalness determination processing such that the link direction is the direction extending from one link end toward the other link end.
(6) In the embodiment that is described above, an example was explained of a case in which the map database 31 and the learned database 35 are provided separately in independent storage media as a hardware configuration. However, the embodiments of the present invention are not limited to this example. Specifically, one embodiment of the present invention is configured such that the map database 31 and the learned database 35 are both stored in a common storage medium.
(7) In the embodiment that is described above, an example was explained of a case in which the navigation device 1 obtains the update data 53 that are distributed from the server device 2 by receiving the update data 53 by wireless communication through a communication network such as a mobile telephone network, a wireless local area network (LAN), or the like. However, the embodiments of the present invention are not limited to this example. Specifically, one embodiment of the present invention is configured such that the update data 53 are obtained through a storage medium such as an optical disk, a magnetic disk, or the like, for example. Alternatively, one embodiment of the present invention may be configured such that a data distribution terminal device that is provided in a state in which it is capable of distributing the update data 53 that are received from the server device 2 is connected to the navigation device 1 by a cable or the like, and the update data 53 are obtained through wired communication between the terminal device and the navigation device 1.

The present invention can be utilized in a system that provides and stores road network data that describe a road in terms of connection relationships between nodes that correspond to intersections and links that correspond to roads that connect the intersections, and that also provides and stores additional data in association with each of the links.

## Claims

1. A map data update system, comprising:
a first storage portion (**31**) that is configured to store road network data (**33**) that describes a road in terms of a connection relationship between a node (**n**) that corresponds to an intersection and a link (**k**) that corresponds to a road that connects intersections;
an update portion (**16**) that is configured to receive update data (**53**) that reflects changes in an actual road and updates the road network data (**33**) based on the update data;
a data obtaining portion (**14**) that is configured to obtain additional data (**36**) by a means that is different from a means that is configured to receive the update data by the update portion and is provided in a vehicle;
a second storage portion (**35**) that is configured to store the additional data (**36**) that is obtained by the data obtaining portion (**14**) together with association information that indicates association between the additional data (**36**) and the link (**k**); and
a correcting portion (**17**) that is configured to, when update processing of the road network data (**33**) is executed by the update portion (**16**), correct the association information in the additional data (**36**) that is stored in the second storage portion (**35**) and is associated with the link (**k**) that is changed by the update processing,
**characterized in that**
the additional data (**36**) includes information that indicates a relative positional relationship to a link end coordinate of the link that is associated with the additional data (**36**), and
the correcting portion (**17**) is configured to compare a link end coordinate and a link direction of a post-update link to a link end coordinate and a link direction of a pre-update link and to correct the association information based on the result of the comparison, and
the correcting portion (**17**) includes
an identicalness determining portion (**18**) that is configured to compare the link end coordinate and the link direction of the post-update link to the link end coordinate and the link direction of the pre-update link, and, when the link end coordinate and the link direction of at least one end of the post-update link are within respective specified identicalness determination ranges from the link end coordinate and the link direction of at least one end of the pre-update link, to determine that the post-update link and the pre-update link correspond to the same road,
a correction processing portion (**20**) that is configured to, when the identicalness determining portion (**18**) determines that the post-update link and the pre-update link correspond to the same road, correct the association information so as to indicate association with the post-update link, and
a correction link ID determining portion (**19**) that is configured to, when the identicalness determining portion (**18**) determines that a combination of a plurality of post-update links corresponds to the same road as a pre-update link, determine, based on the relative positional relationship information, whether the association information is to be corrected such that the association information indicates association with one of the plurality of the post-update links.

2. The map data update system according to claim 1, wherein
the correcting portion (**17**) is configured to determine whether a post-update link that corresponds to the same road as a pre-update link exists, and to correct the association information based on the result of the determination.

3. The map data update system according to claim 1, wherein
the road network data (**33**) includes a shape interpolation point (**m**) that is provided along the link (**k**) and indicates the shape of the link, and
the link direction is a direction from a link end on the link (**k**) toward the shape interpolation point (**m**) that is close to the link end.

4. The map data update system according to claim 1, wherein
the additional data (**36**) includes feature data that pertains to a feature that is provided on a road, and
the relative positional relationship information is information on a distance to the feature from a link end coordinate of the link that is associated with the additional data (**36**).

5. The map data update system according to claim 1, wherein
the correction link ID determining portion (**19**) is configured to determine that the association information is to be corrected such that the association information indicates an association with one of the plurality of the post-update links which has a length that is longer than the distance indicated by relative positional relationship information.

6. The map data update system according to any one of claims 3 to 5, wherein
the correcting portion (**17**) is configured to, when the identicalness determining portion (**18**) determines that a combination of a plurality of post-update links corresponds to the same road as a pre-update link, delete from the second storage portion (**35**) the additional data (**36**) that is associated with the pre-update link.

7. The map data update system according to any one of claims 1 and 3 to 6, wherein
the correcting portion (**17**) further includes
a deletion processing portion (**21**) that is configured to, when the identicalness determining portion (**18**) determines that no post-update link exists that corresponds to the same road as a pre-update link, delete from the second storage portion (**35**) the additional data (**36**) that is associated with the pre-update link.

8. The map data update system according to any one of claims 1 to 7, wherein
the update data (**53**) includes related data that is associated with the link (**k**), and
the map data update system further comprises:
a data deleting portion (**14**) that is configured to, when the related data and the additional data (**36**) have the same attribute and are both associated with the same link in the road network data (**33**) that is updated by the update portion (**16**), delete the additional data (**36**) from the second storage portion (**35)**.

9. The map data update system according to any one of claims 1 to 8, wherein
the additional data (**36**) includes at least one of feature data, link attribute data that pertains to an attribute of the link (**k**), and vehicle behavior data that pertains to a behavior of a vehicle.

10. The map data update system according to any one of claims 1 to 9, further comprising:
a vehicle position detecting portion (**12**) that is configured to detect a position of a vehicle; and
a navigation computational processing portion (**22**) that is configured to perform computational processing for navigation by referencing the vehicle position, as well as the road network data (**33**) and the additional data (**36**) that are stored in the first storage portion (**31**) and the second storage portion (**35**), respectively.

11. The map data update system according to any one of claims 1 to 9, further comprising:
a vehicle position detecting portion (**12**) that is configured to detect a position of a vehicle; and
a vehicle control portion (**26**) that is configured to control the vehicle by referencing the vehicle position, as well as the road network data (**33**) and the additional data (**36**) that are stored in the first storage portion (**31**) and the second storage portion (**35**), respectively.

12. A map data update method, comprising:
storing road network data (**33**) that describes a road in terms of a connection relationship between a node (**n**) that corresponds to an intersection and a link (**k**) that corresponds to a road that connects intersections;
receiving update data (**53**) that reflects changes in an actual road and updating the road network data (**33**) based on the update data;
obtaining additional data (**36**) by a means that differs from a means that receives the update data (**53**);
storing the additional data (**36**) together with association information that indicates association between the additional data (**36**) and the link (**k**); and
correcting, when update processing of the road network data (**33**) is executed by the update portion (**16**), the association information in the additional data (**36**) that is stored in the second storage portion (**35**) and is associated with the link that is changed by the update processing,
**characterized in that**
the additional data (**36**) includes information that indicates a relative positional relationship to a link end coordinate of the link that is associated with the additional data (**36**), and
in the correcting step, a link end coordinate and a link direction of a post-update link are compared to a link end coordinate and a link direction of a pre-update link, and then the association information is corrected based on the result of the comparison, and
the correcting step comprises
an identicalness determining step which compares the link end coordinate and the link direction of the post-update link to the link end coordinate and the link direction of the pre-update link, and, when the link end coordinate and the link direction of at least one end of the post-update link are within respective specified identicalness determination ranges from the link end coordinate and the link direction of at least one end of the pre-update link, determines that the post-update link and the pre-update link correspond to the same road,
a correction processing step that, when the identicalness determining step determines that the post-update link and the pre-update link correspond to the same road, corrects the association information so as to indicate association with the post-update link, and
a correction link ID determining step that, when the identicalness determining step determines that a combination of a plurality of post-update links corresponds to the same road as a pre-update link, determines, based on the relative positional relationship information, whether the association information is to be corrected such that the association information indicates association with one of the plurality of the post-update links.

13. A computer-readable storage medium storing a map data update program, comprising:
storing road network data (**33**) that describes a road in terms of a connection relationship between a node (**n**) that corresponds to an intersection and a link (**k**) that corresponds to a road that connects intersections;
- receiving update data (**53**) that reflects changes in an actual road and updating the road network data (**33**) based on the update data;
obtaining additional data (**36**) by a means that differs from a means that receives the update data (**53**);
storing the additional data (**36**) together with association information that indicates association between the additional data (**36**) and the link (**k**); and
correcting, when update processing of the road network data **(33)** is executed by the update portion **(16),** the association information in the additional data **(36)** that is stored in the second storage portion **(35)** and is associated with the link that is changed by the update processing,
**characterized in that**
the additional data (**36**) includes information that indicates a relative positional relationship to a link end coordinate of the link that is associated with the additional data (**36**), and
in the correcting step, a link end coordinate and a link direction of a post-update link are compared to a link end coordinate and a link direction of a pre-update link, and then the association information is corrected based on the result of the comparison, and
the correcting step comprises
an identicalness determining step which compares the link end coordinate and the link direction of the post-update link to the link end coordinate and the link direction of the pre-update link, and, when the link end coordinate and the link direction of at least one end of the post-update link are within respective specified identicalness determination ranges from the link end coordinate and the link direction of at least one end of the pre-update link, determines that the post-update link and the pre-update link correspond to the same road,
a correction processing step that, when the identicalness determining step determines that the post-update link and the pre-update link correspond to the same road, corrects the association information so as to indicate association with the post-update link, and
a correction link ID determining step that, when the identicalness determining step determines that a combination of a plurality of post-update links corresponds to the same road as a pre-update link, determines, based on the relative positional relationship information, whether the association information is to be corrected such that the association information indicates association with one of the plurality of the post-update links.

## Patentansprüche

1. Kartendatenaktualisierungssystem mit
einem ersten Speicherabschnitt (**31**), der konfiguriert ist, Straßennetzwerkdaten (**33**) zu speichern, die eine Strasse im Hinblick auf eine Verknüpfungsbeziehung zwischen einem Knoten (**n**), der einer Kreuzung entspricht, und einer Verbindung (**k**) beschreiben, die einer Strasse entspricht, die Kreuzungen verbindet;
einem Aktualisierungsabschnitt (**16**), der konfiguriert ist, Aktualisierungsdaten (**53**) zu empfangen, die Änderungen an einer tatsächlichen Strasse reflektieren, und die Straßennetzwerkdaten (**33**) auf der Grundlage der Aktualisierungsdaten aktualisiert;
einem Datenerlangungsabschnitt (**14**), der konfiguriert ist, zusätzliche Daten **(36)** durch ein Mittel zu erlangen, das sich von einem Mittel unterscheidet, das konfiguriert ist, die Aktualisierungsdaten durch den Aktualisierungsabschnitt zu empfangen, und in einem Fahrzeug vorgesehen ist;
einem zweiten Speicherabschnitt (**35**), der konfiguriert ist, die durch den Datenerlangungsabschnitt (**14**) erlangten zusätzlichen Daten (**36**) zusammen mit Zuordnungsinformationen zu speichern, die eine Zuordnung zwischen den zusätzlichen Daten (**36**) und der Verbindung angeben; und
einem Korrekturabschnitt (**17**), der konfiguriert ist, bei Ausführung einer Aktualisierungsverarbeitung der Straßennetzwerkdaten (**33**) durch den Aktualisierungsabschnitt (**16**) die Zuordnungsinformationen in den zusätzlichen Daten (**36**) zu korrigieren, die in dem zweiten Speicherabschnitt **(35)** gespeichert sind und der Verbindung zugeordnet sind, die durch die Aktualisierungsverarbeitung geändert wird,
**dadurch gekennzeichnet, dass**
die zusätzlichen Daten **(36)** Informationen aufweisen, die eine relative Positionsbeziehung zwischen einer Verbindungsendkoordinate der Verbindung angibt, die die den zusätzlichen Daten (**36**) zugeordnet ist, und
der Korrekturabschnitt (**17**) konfiguriert ist, eine Verbindungsendkoordinate und eine Verbindungsrichtung einer Nach-Aktualisierungs-Verbindung mit einer Verbindungsendkoordinate und einer Verbindungsrichtung einer Vor-Aktualisierungs-Verbindung zu vergleichen, und die Zuordnungsinformationen auf der Grundlage des Ergebnisses des Vergleichs zu korrigieren, und
der Korrekturabschnitt (**17**) aufweist:
einen Übereinstimmungsbestimmungsabschnitt (**18**), der konfiguriert ist, die Verbindungsendkoordinate und die Verbindungsrichtung der Nach-Aktualisierungs-Verbindung mit der Verbindungsendkoordinate und der Verbindungsrichtung der Vor-Aktualisierungs-Verbindung zu vergleichen, und, wenn die Verbindungsendkoordinate und die Verbindungsrichtung von zumindest einem Ende der Nach-Aktualisierungs-Verbindung innerhalb spezifizierter Übereinstimmungsbestimmungsbereiche von der Verbindungsendkoordinate und der Verbindungsrichtung von zumindest einem Ende der Vor-Aktualisierungs-Verbindung sind, zu bestimmen, dass die Nach-Aktualisierungs-Verbindung und die Vor-Aktualisierungs-Verbindung derselben Strasse entsprechen,
einen Korrekturverarbeitungsabschnitt (**20**), der konfiguriert ist, wenn der Übereinstimmungsbestimmungsabschnitt (**18**) bestimmt, dass die Nach-Aktualisierungs-Verbindung und die Vor-Aktualisierungs-Verbindung derselben Strasse entsprechen, die Zuordnungsinformationen ändert, um eine Zuordnung zu der Nach-Aktualisierungs-Verbindung anzugeben, und
einen Korrekturverbindungs-ID-Bestimmungsabschnitt (**19**), der konfiguriert ist, wenn der Übereinstimmungsbestimmungsabschnitt **(18)** bestimmt, dass eine Kombination einer Vielzahl von Nach-Aktualisierungs-Verbindungen derselben Strasse wie eine Vor-Aktualisierungs-Verbindung entspricht, auf der Grundlage der relativen Positionsbeziehungsinformationen zu bestimmen, ob die Zuordnungsinformationen derart zu korrigieren sind, dass die Zuordnungsinformationen eine Zuordnung zu einer aus der Vielzahl der Nach-Aktualisierungs-Verbindungen angibt.

2. Kartendatenaktualisierungssystem nach Anspruch 1, wobei
der Korrekturabschnitt **(17)** konfiguriert ist, zu bestimmen, ob eine Nach-Aktualisierungs-Verbindung, die derselben Strasse wie eine Vor-Aktualisierungs-Verbindung entspricht, vorhanden ist, und die Zuordnungsinformationen auf der Grundlage des Ergebnisses der Bestimmung zu korrigieren.

3. Kartendatenaktualisierungssystem nach Anspruch 1, wobei
die Straßennetzwerkdaten (**33**) einen Forminterpolationspunkt (**m**) aufweisen, der entlang der Verbindung (**k**) vorgesehen ist und die Form der Verbindung angibt, und
die Verbindungsrichtung eine Richtung von einem Verbindungsende auf der Verbindung (**k**) zu dem Forminterpolationspunkt (**m**) ist, der nahe an dem Verbindungsende ist.

4. Kartendatenaktualisierungssystem nach Anspruch 1, wobei
die zusätzlichen Daten (**36**) Merkmalsdaten aufweisen, die sich auf ein Merkmal beziehen, das an einer Strasse vorgesehen ist, und
die relative Positionsbeziehungsinformationen Informationen bezüglich eines Abstands zu dem Merkmal von einer Verbindungsendkoordinate der Verbindung sind, die den zusätzlichen Daten **(36)** zugeordnet ist.

5. Kartendatenaktualisierungssystem nach Anspruch 1, wobei
der Korrekturverbindungs-ID-Bestimmungsabschnitt (**19**) konfiguriert ist, zu bestimmen, dass die Zuordnungsinformationen derart zu korrigieren sind, dass die Zuordnungsinformationen eine Zuordnung mit einer aus der Vielzahl der Nach-Aktualisierungs-Verbindungen angeben, die eine Länge hat, die länger als der durch die relative Positionsbeziehungsinformationen angegebene Abstand ist.

6. Kartendatenaktualisierungssystem nach einem der Ansprüche 3 bis 5, wobei
der Korrekturabschnitt **(17)** konfiguriert ist, wenn der Übereinstimmungsbestimmungsabschnitt **(18)** bestimmt, dass eine Kombination aus einer Vielzahl von Nach-Aktualisierungs-Verbindungen derselben Strasse wie eine Vor-Aktualisierungs-Verbindung entspricht, aus dem zweiten Speicherabschnitt **(35)** die zusätzlichen Daten **(36)** zu löschen, die der Vor-Aktualisierungs-Verbindung zugeordnet sind.

7. Kartendatenaktualisierungssystem nach einem der Ansprüche 1 und 3 bis 6, wobei
der Korrekturabschnitt (**17**) weiterhin aufweist:
einen Löschverarbeitungsabschnitt (**21**), der konfiguriert ist, wenn der Übereinstimmungsbestimmungsabschnitt (**18**) bestimmt, dass keine Nach-Aktualisierungs-Verbindung existiert, die derselben Strasse wie eine Vor-Aktualisierungs-Verbindung entspricht, die zusätzlichen Daten (**36**), die der Vor-Aktualisierungs-Verbindung zugeordnet sind, aus dem zweiten Speicherabschnitt (**35**) zu löschen.

8. Kartendatenaktualisierungssystem nach einem der Ansprüche 1 bis 7, wobei
die Aktualisierungsdaten (**53**) bezogene Daten aufweisen, die der Verbindung (**k**) zugeordnet sind, und
das Kartendatenaktualisierungssystem weiterhin aufweist:
einen Datenlöschabschnitt (**14**), der konfiguriert ist, wenn die bezogenen Daten die zusätzlichen Daten (**36**) dasselbe Attribut aufweisen und beide derselben Verbindung in den Straßennetzwerkdaten (**33**) zugeordnet sind, die durch den Aktualisierungsabschnitt (**16**) aktualisiert wird, die zusätzlichen Daten (**36**) aus dem zweiten Speicherabschnitt **(35)** zu löschen.

9. Kartendatenaktualisierungssystem nach einem der Ansprüche 1 bis 8, wobei
die Aktualisierungsdaten (**53**) Merkmalsdaten, Verbindungsattributdaten, die ein Attribut der Verbindung (**k**) betreffen, und/oder Fahrzeugverhaltensdaten aufweisen, die ein Verhalten eine Fahrzeugs betreffen.

10. Kartendatenaktualisierungssystem nach einem der Ansprüche 1 bis 9, weiterhin mit
einem Fahrzeugpositionserfassungsabschnitt (**12**), der konfiguriert ist, eine Position eines Fahrzeugs zu erfassen, und
einem Navigationsrechnungsverarbeitungsabschnitt (**22**), der konfiguriert ist, eine Rechnungsverarbeitung für eine Navigation durch Bezugnahme auf die Fahrzeugsposition als auch auf die Straßennetzwerkdaten (**33**) und die zusätzlichen Daten (**36**) durchzuführen, die jeweils in dem ersten Speicherabschnitt (**31**) und dem zweiten Speicherabschnitt (**35**) gespeichert sind.

11. Kartendatenaktualisierungssystem nach einem der Ansprüche 1 bis 9, weiterhin mit
einem Fahrzeugpositionserfassungsabschnitt (**12**), der konfiguriert ist, eine Position eines Fahrzeugs zu erfassen, und
einem Fahrzeugsteuerungsabschnitt (**26**)**,** der konfiguriert ist, das Fahrzeug durch Bezugnahme auf die Fahrzeugsposition als auch auf die Straßennetzwerkdaten (**33**) und die zusätzlichen Daten (**36**) zu steuern, die jeweils in dem ersten Speicherabschnitt (**31**) und dem zweiten Speicherabschnitt (**35**) gespeichert sind.

12. Kartendatenaktualisierungsverfahren mit
Speichern von Straßennetzwerkdaten (**33**), die eine Strasse im Hinblick auf eine Verknüpfungsbeziehung zwischen einem Knoten (**n**), der einer Kreuzung entspricht, und einer Verbindung (**k**) beschreiben, die einer Strasse entspricht, die Kreuzungen verbindet;
Empfangen von Aktualisierungsdaten (**53**), die Änderungen an einer tatsächlichen Strasse reflektieren, und Aktualisieren der Straßennetzwerkdaten (**33**) auf der Grundlage der Aktualisierungsdaten;
Erlangen von zusätzlichen Daten (**36**) durch ein Mittel, das sich von einem Mittel unterscheidet, das konfiguriert ist, die Aktualisierungsdaten durch den Aktualisierungsabschnitt zu empfangen;
Speichern der zusätzlichen Daten (**36**) zusammen mit Zuordnungsinformationen, die eine Zuordnung zwischen den zusätzlichen Daten (**36**) und der Verbindung angeben; und
Korrigieren, bei Ausführung einer Aktualisierungsverarbeitung der Straßennetzwerkdaten (**33**) durch den Aktualisierungsabschnitt (**16**), der Zuordnungsinformationen in den zusätzlichen Daten (**36**), die in dem zweiten Speicherabschnitt (**35**) gespeichert sind und der Verbindung zugeordnet sind, die durch die Aktualisierungsverarbeitung geändert wird,
**dadurch gekennzeichnet, dass**
die zusätzlichen Daten **(36)** Informationen aufweisen, die eine relative Positionsbeziehung zwischen einer Verbindungsendkoordinate der Verbindung angibt, die die den zusätzlichen Daten **(36)** zugeordnet ist, und
in dem Korrekturschritt eine Verbindungsendkoordinate und eine Verbindungsrichtung einer Nach-Aktualisierungs-Verbindung mit einer Verbindungsendkoordinate und einer Verbindungsrichtung einer Vor-Aktualisierungs-Verbindung verglichen wird, und dann die Zuordnungsinformationen auf der Grundlage des Ergebnisses des Vergleichs korrigiert werden, und
der Korrekturschritt aufweist:
einen Übereinstimmungsbestimmungsschritt, der die Verbindungsendkoordinate und die Verbindungsrichtung der Nach-Aktualisierungs-Verbindung mit der Verbindungsendkoordinate und der Verbindungsrichtung der Vor-Aktualisierungs-Verbindung vergleicht, und, wenn die Verbindungsendkoordinate und die Verbindungsrichtung von zumindest einem Ende der Nach-Aktualisierungs-Verbindung innerhalb spezifizierter Übereinstimmungsbestimmungsbereiche von der Verbindungsendkoordinate und der Verbindungsrichtung von zumindest einem Ende der Vor-Aktualisierungs-Verbindung sind, bestimmt, dass die Nach-Aktualisierungs-Verbindung und die Vor-Aktualisierungs-Verbindung derselben Strasse entsprechen,
einen Korrekturverarbeitungsschritt, der, wenn der Übereinstimmungsbestimmungsschritt bestimmt, dass die Nach-Aktualisierungs-Verbindung und die Vor-Aktualisierungs-Verbindung derselben Strasse entsprechen, die Zuordnungsinformationen ändert, um eine Zuordnung zu der Nach-Aktualisierungs-Verbindung anzugeben, und
einen Korrekturverbindungs-ID-Bestimmungsschritt, der, wenn der Übereinstimmungsbestimmungsschritt bestimmt, dass eine Kombination einer Vielzahl von Nach-Aktualisierungs-Verbindungen derselben Strasse wie eine Vor-Aktualisierungs-Verbindung entspricht, auf der Grundlage der relativen Positionsbeziehungsinformationen bestimmt, ob die Zuordnungsinformationen derart zu korrigieren sind, dass die Zuordnungsinformationen eine Zuordnung zu einer aus der Vielzahl der Nach-Aktualisierungs-Verbindungen angibt.

13. Computerlesbares Speichermedium mit einem Kartendatenaktualisierungsprogramm, mit
Speichern von Straßennetzwerkdaten (**33**), die eine Strasse im Hinblick auf eine Verknüpfungsbeziehung zwischen einem Knoten (**n**), der einer Kreuzung entspricht, und einer Verbindung (**k**) beschreiben, die einer Strasse entspricht, die Kreuzungen verbindet;
Empfangen von Aktualisierungsdaten (**53**), die Änderungen an einer tatsächlichen Strasse reflektieren, und Aktualisieren der Straßennetzwerkdaten (**33**) auf der Grundlage der Aktualisierungsdaten;
Erlangen von zusätzlichen Daten (**36**) durch ein Mittel, das sich von einem Mittel unterscheidet, das konfiguriert ist, die Aktualisierungsdaten durch den Aktualisierungsabschnitt zu empfangen;
Speichern der zusätzlichen Daten (**36**) zusammen mit Zuordnungsinformationen, die eine Zuordnung zwischen den zusätzlichen Daten (**36**) und der Verbindung angeben; und
Korrigieren, bei Ausführung einer Aktualisierungsverarbeitung der Straßennetzwerkdaten **(33)** durch den Aktualisierungsabschnitt **(16),** der Zuordnungsinformationen in den zusätzlichen Daten **(36),** die in dem zweiten Speicherabschnitt **(35)** gespeichert sind und der Verbindung zugeordnet sind, die durch die Aktualisierungsverarbeitung geändert wird,
**dadurch gekennzeichnet, dass**
die zusätzlichen Daten **(36)** Informationen aufweisen, die eine relative Positionsbeziehung zwischen einer Verbindungsendkoordinate der Verbindung angibt, die die den zusätzlichen Daten **(36)** zugeordnet ist, und
in dem Korrekturschritt eine Verbindungsendkoordinate und eine Verbindungsrichtung einer Nach-Aktualisierungs-Verbindung mit einer Verbindungsendkoordinate und einer Verbindungsrichtung einer Vor-Aktualisierungs-Verbindung verglichen wird, und dann die Zuordnungsinformationen auf der Grundlage des Ergebnisses des Vergleichs korrigiert werden, und
der Korrekturschritt aufweist:
einen Übereinstimmungsbestimmungsschritt, der die Verbindungsendkoordinate und die Verbindungsrichtung der Nach-Aktualisierungs-Verbindung mit der Verbindungsendkoordinate und der Verbindungsrichtung der Vor-Aktualisierungs-Verbindung vergleicht, und, wenn die Verbindungsendkoordinate und die Verbindungsrichtung von zumindest einem Ende der Nach-Aktualisierungs-Verbindung innerhalb spezifizierter Übereinstimmungsbestimmungsbereiche von der Verbindungsendkoordinate und der Verbindungsrichtung von zumindest einem Ende der Vor-Aktualisierungs-Verbindung sind, bestimmt, dass die Nach-Aktualisierungs-Verbindung und die Vor-Aktualisierungs-Verbindung derselben Strasse entsprechen,
einen Korrekturverarbeitungsschritt, der, wenn der Übereinstimmungsbestimmungsschritt bestimmt, dass die Nach-Aktualisierungs-Verbindung und die Vor-Aktualisierungs-Verbindung derselben Strasse entsprechen, die Zuordnungsinformationen ändert, um eine Zuordnung zu der Nach-Aktualisierungs-Verbindung anzugeben, und
einen Korrekturverbindungs-ID-Bestimmungsschritt, der, wenn der Übereinstimmungsbestimmungsschritt bestimmt, dass eine Kombination einer Vielzahl von Nach-Aktualisierungs-Verbindungen derselben Strasse wie eine Vor-Aktualisierungs-Verbindung entspricht, auf der Grundlage der relativen Positionsbeziehungsinformationen bestimmt, ob die Zuordnungsinformationen derart zu korrigieren sind, dass die Zuordnungsinformationen eine Zuordnung zu einer aus der Vielzahl der Nach-Aktualisierungs-Verbindungen angibt.

## Revendications

1. Système de mise à jour de données de carte, comprenant :
une première partie de stockage (31) qui est configurée pour stocker des données de réseau routier (33) qui décrivent une route en termes d'une relation de connexion entre un noeud (n) qui correspond à une intersection et une liaison (k) qui correspond à une route qui relie des intersections ;
une partie de mise à jour (16) qui est configurée pour recevoir des données de mise à jour (53) qui reflètent des changements d'une route réelle et qui met à jour les données de réseau routier (33) sur la base des données de mise à jour ;
une partie d'obtention de données (14) qui est configurée pour obtenir des données supplémentaires (36) par un moyen qui est différent d'un moyen qui est configuré pour recevoir les données de mise à jour par la partie de mise à jour et qui est prévue dans un véhicule ;
une deuxième partie de stockage (35) qui est configurée pour stocker les données supplémentaires (36) qui sont obtenues par la partie d'obtention de données (14) conjointement avec des informations d'association qui indiquent une association entre les données supplémentaires (36) et la liaison (k) ; et
une partie de correction (17) qui est configurée pour corriger, lorsqu'un traitement de mise à jour des données de réseau routier (33) est exécuté par la partie de mise à jour (16), les informations d' association dans les données supplémentaires (36) qui sont stockées dans la deuxième partie de stockage (35) et qui sont associées à la liaison (k) qui est changée par le traitement de mise à jour, **caractérisé en ce que**
les données supplémentaires (36) comportent des informations qui indiquent une relation de position relative à une coordonnée d'extrémité de liaison de la liaison qui est associée aux données supplémentaires (36), et
la partie de correction (17) est configurée pour comparer une coordonnée d'extrémité de liaison et une direction de liaison d'une liaison de mise à jour ultérieure à une coordonnée d'extrémité de liaison et à une direction de liaison d'une liaison de mise à jour préalable et pour corriger les informations d'association sur la base du résultat de la comparaison, et
la partie de correction (17) comporte
une partie de détermination de caractère identique (18) qui est configurée pour comparer la coordonnée d'extrémité de liaison et la direction de liaison de la liaison de mise à jour ultérieure à la coordonnée d'extrémité de liaison et à la direction de liaison de la liaison de mise à jour préalable et pour déterminer, lorsque la coordonnée d'extrémité de liaison et la direction de liaison d'au moins une extrémité de la liaison de mise à jour ultérieure se trouvent dans des plages de détermination de caractère identique spécifiée respectives par rapport à la coordonnée d'extrémité de liaison et à la direction de liaison d'au moins une extrémité de la liaison de mise à jour préalable, que la liaison de mise à jour ultérieure et la liaison de mise à jour préalable correspondent à la même route,
une partie de traitement de correction (20) qui est configurée pour corriger, lorsque la partie de détermination de caractère identique (18) détermine que la liaison de mise à jour ultérieure et la liaison de mise à jour préalable correspondent à la même route, les informations d'association de manière à indiquer une association avec la liaison de mise à jour ultérieure, et
une partie de détermination d'ID de liaison de correction (19) qui est configurée pour déterminer, sur la base des informations de relation de position relative, lorsque la partie de détermination de caractère identique (18) détermine qu'une combinaison d'une pluralité de liaisons de mise à jour ultérieure correspond à la même route qu'une liaison de mise à jour préalable, si les informations d'association doivent être corrigées de sorte que les informations d'association indiquent une association avec l'une de la pluralité de liaisons de mise à jour ultérieure.

2. Système de mise à jour de données de carte selon la revendication 1, dans lequel
la partie de correction (17) est configurée pour déterminer si une liaison de mise à jour ultérieure qui correspond à la même route qu'une liaison de mise à jour préalable existe et pour corriger les informations d'association sur la base du résultat de la détermination.

3. Système de mise à jour de données de carte selon la revendication 1, dans lequel
les données de réseau routier (33) comportent un point d'interpolation de forme (m) qui est prévu le long de la liaison (k) et qui indique la forme de la liaison, et
la direction de liaison est une direction à partir d'une extrémité de liaison sur la liaison (k) vers le point d'interpolation de forme (m) qui est proche de l'extrémité de liaison.

4. Système de mise à jour de données de carte selon la revendication 1, dans lequel
les données supplémentaires (36) comportent des données de caractéristique qui se rapportent à une caractéristique qui est prévue sur une route, et
les informations de relation de position relative sont des informations concernant une distance jusqu'à la caractéristique à partir d'une coordonnée d'extrémité de liaison de la liaison qui est associée aux données supplémentaires (36).

5. Système de mise à jour de données de carte selon la revendication 1, dans lequel
la partie de détermination d'ID de liaison de correction (19) est configurée pour déterminer que les informations d'association doivent être corrigées de sorte que les informations d'association indiquent une association avec l'une de la pluralité de liaisons de mise à jour ultérieure qui a une longueur qui est supérieure à la distance indiquée par les informations de relation de position relative.

6. Système de mise à jour de données de carte selon l'une quelconque des revendications 3 à 5, dans lequel
la partie de correction (17) est configurée pour supprimer de la deuxième partie de stockage (35), lorsque la partie de détermination de caractère identique (18) détermine qu'une combinaison d'une pluralité de liaisons de mise à jour ultérieure correspond à la même route qu'une liaison de mise à jour préalable, les données supplémentaires (36) qui sont associées à la liaison de mise à jour préalable.

7. Système de mise à jour de données de carte selon l'une quelconque des revendications 1 et 3 à 6, dans lequel
la partie de correction (17) comporte en outre
une partie de traitement de suppression (21) qui est configurée pour supprimer de la deuxième partie de stockage (35), lorsque la partie de détermination de caractère identique (18) détermine qu'aucune liaison de mise à jour ultérieure n'existe qui correspond à la même route qu'une liaison de mise à jour préalable, les données supplémentaires (36) qui sont associées à la liaison de mise à jour préalable.

8. Système de mise à jour de données de carte selon l'une quelconque des revendications 1 à 7, dans lequel
les données de mise à jour (53) comportent des données relatives qui sont associées à la liaison (k), et
le système de mise à jour de données de carte comprend en outre :
une partie de suppression de données (14) qui est configurée pour supprimer, lorsque les données relatives et les données supplémentaires (36) ont le même attribut et sont toutes deux associées à la même liaison dans les données de réseau routier (33) qui sont mises à jour par la partie de mise à jour (16), les données supplémentaires (36) de la deuxième partie de stockage (35).

9. Système de mise à jour de données de carte selon l'une quelconque des revendications 1 à 8, dans lequel
les données supplémentaires (36) comportent au moins l'une des données de caractéristique, des données d'attribut de liaison qui se rapportent à un attribut de la liaison (k) et des données de comportement de véhicule qui se rapportent à un comportement d'un véhicule.

10. Système de mise à jour de données de carte selon l'une quelconque des revendications 1 à 9, comprenant en outre :
une partie de détection de position de véhicule (12) qui est configurée pour détecter une position d'un véhicule ; et
une partie de traitement de calcul de navigation (22) qui est configurée pour effectuer un traitement de calcul pour une navigation en se référant à la position de véhicule, ainsi qu'aux données de réseau routier (33) et qu'aux données supplémentaires (36) qui sont stockées dans la première partie de stockage (31) et la deuxième partie de stockage (35), respectivement.

11. Système de mise à jour de données de carte selon l'une quelconque des revendications 1 à 9, comprenant en outre :
une partie de détection de position de véhicule (12) qui est configurée pour détecter une position d'un véhicule ; et
une partie de commande de véhicule (26) qui est configurée pour commander le véhicule en se référant à la position de véhicule, ainsi qu'aux données de réseau routier (33) et qu'aux données supplémentaires (36) qui sont stockées dans la première partie de stockage (31) et la deuxième partie de stockage (35), respectivement.

12. Procédé de mise à jour de données de carte, comprenant le fait :
de stocker des données de réseau routier (33) qui décrivent une route en termes d'une relation de connexion entre un noeud (n) qui correspond à une intersection et une liaison (k) qui correspond à une route qui relie des intersections ;
de recevoir des données de mise à jour (53) qui reflètent des changements d'une route réelle et de mettre à jour les données de réseau routier (33) sur la base des données de mise à jour ;
d'obtenir des données supplémentaires (36) par un moyen qui diffère d'un moyen qui reçoit les données de mise à jour (53) ;
de stocker les données supplémentaires (36) conjointement avec des informations d'association qui indiquent une association entre les données supplémentaires (36) et la liaison (k) ; et
de corriger, lorsqu'un traitement de mise à jour des données de réseau routier (33) est exécuté par la partie de mise à jour (16), les informations d'association dans les données supplémentaires (36) qui sont stockées dans la deuxième partie de stockage (35) et qui sont associées à la liaison qui est changée par le traitement de mise à jour,
**caractérisé en ce que**
les données supplémentaires (36) comportent des informations qui indiquent une relation de position relative à une coordonnée d'extrémité de liaison de la liaison qui est associée aux données supplémentaires (36), et
dans l'étape de correction, une coordonnée d'extrémité de liaison et une direction de liaison d'une liaison de mise à jour ultérieure sont comparées à une coordonnée d'extrémité de liaison et à une direction de liaison d'une liaison de mise à jour préalable et ensuite les informations d'association sont corrigées sur la base du résultat de la comparaison, et
l'étape de correction comprend
une étape de détermination de caractère identique qui compare la coordonnées d'extrémité de liaison et la direction de liaison de la liaison de mise à jour ultérieure à la coordonnée d'extrémité de liaison et à la direction de liaison de la liaison de mise à jour préalable et qui détermine, lorsque la coordonnée d'extrémité de liaison et la direction de liaison d'au moins une extrémité de la liaison de mise à jour ultérieure se trouvent dans des plages de détermination de caractère identique spécifiée respectives par rapport à la coordonnée d'extrémité de liaison et à la direction de liaison d'au moins une extrémité de la liaison de mise à jour préalable, que la liaison de mise à jour ultérieure et la liaison de mise à jour préalable correspondent de la même route,
une étape de traitement de correction qui corrige, lorsque l'étape de détermination de caractère identique détermine que la liaison de mise à jour ultérieure et la liaison de mise à jour préalable correspondent à la même route, les informations d'association de manière à indiquer une association avec la liaison de mise à jour ultérieure, et
une étape de détermination d'ID de liaison de correction qui détermine, sur la base des informations de relation de position relative, lorsque l'étape de détermination de caractère identique détermine qu'une combinaison d'une pluralité de liaisons de mise à jour ultérieure correspond à la même route qu'une liaison de mise à jour préalable, si les informations d'association doivent être corrigées de sorte que les informations d'association indiquent une association avec l'une de la pluralité de liaisons de mise à jour ultérieure.

13. Support de stockage lisible par ordinateur stockant un programme de mise à jour de données de carte, comprenant le fait :
de stocker des données de réseau routier (33) qui décrivent une route en termes d'une relation de connexion entre un noeud (n) qui correspond à une intersection et une liaison (k) qui correspond à une route qui relie des intersections ;
de recevoir des données de mise à jour (53) qui reflètent des changements d'une route réelle et de mettre à jour les données de réseau routier (33) sur la base des données de mise à jour ;
d'obtenir des données supplémentaires (36) par un moyen qui diffère d'un moyen qui reçoit les données de mise à jour (53) ;
de stocker les données supplémentaires (36) conjointement avec des informations d'association qui indiquent une association entre les données supplémentaires (36) et la liaison (k) ; et
de corriger, lorsqu'un traitement de mise à jour des données de réseau routier (33) est exécuté par la partie de mise à jour (16), les informations d'association dans les données supplémentaires (36) qui sont stockées dans la deuxième partie de stockage (35) et qui sont associées à la liaison qui est changée par le traitement de mise à jour,
**caractérisé en ce que**
les données supplémentaires (36) comportent des informations qui indiquent une relation de position relative à une coordonnée d'extrémité de liaison de la liaison qui est associée aux données supplémentaires (36), et
dans l'étape de correction, une coordonnée d'extrémité de liaison et une direction de liaison d'une liaison de mise à jour ultérieure sont comparées à une coordonnée d'extrémité de liaison et à une direction de liaison d'une liaison de mise à jour préalable et ensuite les informations d'association sont corrigées sur la base du résultat de la comparaison, et
l'étape de correction comprend
une étape de détermination de caractère identique qui compare la coordonnée d'extrémité de liaison et la direction de liaison de la liaison de mise à jour ultérieure à la coordonnée d'extrémité de liaison et à la direction de liaison de la liaison de mise à jour préalable et qui détermine, lorsque la coordonnée d'extrémité de liaison et la direction de liaison d'au moins une extrémité de la liaison de mise à jour ultérieure se trouvent dans des plages de détermination de caractère identique spécifiée respectives par rapport à la coordonnée d'extrémité de liaison et à la direction de liaison d'au moins une extrémité de la liaison de mise à jour préalable, que la liaison de mise à jour ultérieure et la liaison de mise à jour préalable correspondent de la même route,
une étape de traitement de correction qui corrige, lorsque l'étape de détermination de caractère identique détermine que la liaison de mise à jour ultérieure et la liaison de mise à jour préalable correspondent à la même route, les informations d'association de manière à indiquer une association avec la liaison de mise à jour ultérieure, et
une étape de détermination d'ID de liaison de correction qui détermine, sur la base des informations de relation de position relative, lorsque l'étape de détermination de caractère identique détermine qu'une combinaison d'une pluralité de liaisons de mise à jour ultérieure correspond à la même route qu'une liaison de mise à jour préalable, si les informations d'association doivent être corrigées de sorte que les informations d'association indiquent une association avec l'une de la pluralité de liaisons de mise à jour ultérieure.
